# EUROPÄISCHE PATENTSCHRIFT

(11) **EP 4 566 835 B1**
(45) Veröffentlichungstag und Bekanntmachung des Hinweises auf die Patenterteilung: **18.03.2026**
(21) Anmeldenummer: 24179876.8
(22) Anmeldetag: 04.06.2024
(51) Int. Cl.: B60B 35/00, B60B 37/10, B60B 33/00

(54) **STECKBARE RADANORDNUNG**
PLUG-IN WHEEL ASSEMBLY
ENSEMBLE ROUE ENFICHABLE

(30) Priorität: 05.12.2023 DE 102023133976; 23.01.2024 DE 102024101920
(43) Veröffentlichungstag der Anmeldung: 11.06.2025
(73) Patentinhaber: Beger, Udo, 84034 Landshut (DE)
(72) Erfinder: Beger, Udo, 84034 Landshut (DE)
(74) Vertreter: Pröll, Jürgen

(56) Entgegenhaltungen:
- DE-B3- 102017 116 011
- US-A- 5 727 850
- US-A1- 2006 086 574
- US-A1- 2021 228 433
- US-A1- 2023 226 852
- US-B1- 11 432 978

## Beschreibung

Die vorliegende Erfindung betrifft eine steckbare Radanordnung, vorzugsweise zum Einsatz bei einem Rollator, mit den Merkmalen des Patentanspruches 1. Bei der Verwendung der Erfindung bei einem Rollator sind die einzelnen Räder umsteckbar, sodass die Spurbreite des Rollators veränderbar ist. Hierdurch lassen sich die Fahreigenschaften entsprechend der Umgebung, in welcher der Rollator eingesetzt werden soll, anpassen.

### Hintergrund

Der Einsatz von Gehhilfen in Form von Rollatoren soll Menschen beim Gehen unterstützen, denen das Laufen ohne Gehhilfe sonst schwerfallen würde. Sie bieten diesen Menschen einen sicheren Halt und können gleichzeitig beim Gehen vor sich hergeschoben werden. Dabei ist ein besonders sicherer Stand der Rollatoren stets unbedingt erforderlich, da andernfalls Stürze mit auch schweren Verletzungen die Folge sein können. Besonders im Freien und bei unebenem Gelände muss ein sicherer Stand gewährleistet sein. Hierzu wird oftmals eine breite Spurweite gewählt, die ein seitliches Umkippen verhindert. Ist man jedoch in einer sehr ebenen Umgebung unterwegs, wie sie in Innenräumen vorzufinden ist, so kann ein Rollator schmaler ausgebildet werden, da dieser nicht »geländegängig« dimensioniert sein muss, um sicher bewegt werden zu können.

### Stand der Technik

Es gibt Rollatoren, die nur für Innenräume geeignet sind und dementsprechend eine schmalere Spurweite aufweisen als Rollatoren, die für draußen geeignet sind. Solche Rollatoren werden auch Indoor-Rollatoren genannt. Rollatoren für Innenräume sind nur für sehr ebene Umgebungen sicher. Die Breite ist hierbei so dimensioniert, dass die Rollatoren gut durch Innenräume bewegt werden können, ohne an Hindernisse wie Türen, Möbel und Wände zu stoßen. Eine schmale Bauweise hat hierbei den Vorteil, dass solche Rollatoren auch sehr wendig sind und durch schmale Lücken hindurchgeschoben werden können. Nachteilig ist jedoch, dass hierbei auch immer eine schmale Griffbreite einhergeht, die wiederum den Halt einer Person reduziert. Außerdem ist die Kippsicherheit durch die schmale Bauweise verringert. Für einen Einsatz draußen sind solche Indoor-Rollatoren gänzlich ungeeignet und stellen für den Benutzer ein erhebliches Sturzrisiko dar.

Um sich draußen bei unebener Umgebung bewegen zu können, gibt es Rollatoren, die speziell für solche Bedingungen geschaffen sind, indem sie eine breitere Spurweite aufweisen als Rollatoren für Innenräume. Solche Rollatoren werden auch Outdoor-Rollatoren genannt. Durch die breitere Spurweite sind der Stand und dadurch auch der Halt stabiler. Sie weisen gegenüber Indoor-Rollatoren eine höhere Kippsicherheit auf. Auch kann so die Griffbreite entsprechend breiter gewählt werden, sodass sich Personen besser daran festhalten können. Nachteilig ist jedoch hierbei, dass auch das Handling und die Wendigkeit durch die breitere Bauweise verringert ist. Solche Rollatoren sind für den Gebrauch in Innenräumen gänzlich ungeeignet. Man würde schwerer durch Türen kommen und öfter an Hindernissen anstoßen, da Outdoor-Rollatoren breiter ausgebildet sind als Indoor-Rollatoren, da zumeist die Hinterräder bei Outdoor-Rollatoren außen angeordnet sind. Üblicherweise ist es nicht möglich die Vorderräder bei Rollatoren zu tauschen bzw. umzustecken.

Sind Personen auf Rollatoren angewiesen und möchten sowohl drinnen in Innenräumen als auch draußen im Freien einen Rollator verwenden, so kommen sie nicht umhin, jeweils einen Rollator für draußen und einen Rollator für drinnen zu verwenden. Dies kostet zum einen Platz für die Rollatoren und zum anderen sind Rollatoren auch teuer in der Anschaffung. Darüber hinaus zahlt die gesetzliche Krankenkasse lediglich den günstigsten geeigneten Rollator oder aber auch nur einen Teil eines Rollators, sodass eine kostenintensive Zuzahlung erforderlich ist.

Bei einer Erweiterung des betrachteten Stands der Technik im Hinblick auf Radanordnungen sind die im Folgenden aufgeführten Patentschriften zu nennen.

Aus der DE 1 865 003 U ist ein Kinderwagenrad mit Achsstummel und Kotschützer als abnehmbare Einheit offenbart. Dabei wird das Rad mithilfe einer beweglichen Nietverbindung und einem U-förmig gebogenen Flacheisen am Traggestell des Kinderwagens montiert.

Aus der DE 10 2016 118 032 A1 sind eine Antriebseinheit und ein Rollstuhl mit Antriebseinheit bekannt, wobei die Montage des großen Rollstuhlrades an eine Antriebseinheit und damit an den Rollstuhl selbst aufgezeigt ist. Dabei wird eine Welle-Nabe-Verbindung genutzt, um die Ausgangswelle der Antriebseinheit mit der Antriebsachse des montierten Rades zu verbinden.

In DE 20 308 860 U1 ist eine Montage einer Radeinheit eines Kinderwagens bekannt. Bei diesem Kinderwagen soll es möglich sein mittels der Vorderräder eine Lenkbewegungen zu möglichen. Dabei wird eine Radeinheit, bestehend aus einem Rad und einer an das Rad gekoppelten Radachse, in eine Radsitzeinheit montiert.

US 2021/0228433 A1 offenbart einen Rollator zur Unterstützung eines Nutzers hinsichtlich dessen Beweglichkeit. Dabei weist der Rollator ein faltbares Gestell, welches kompakt zusammenfaltbar ist, an das Gestell montierte Räder, Bremseinheiten zum Abbremsen der Räder sowie ein paar Handgriffe auf, die an das Gestell angebracht sind. Die Handgriffe müssen in eine Verschiebeposition überführt werden, um einen Bremsvorgang der Bremseinheiten auszulösen. Zudem kann der Rollator eine Sitzeinheit aufweisen, welche zwei Positionen, eine Sitzposition und eine hochgeklappte Position, aufweist. Weiterhin ist die Aufbringung einer Kraft auf den Sitz, die größer oder gleich definierten Sitzdruckschwellwertes ist, nötig, um einen Bremsvorgang auszulösen.

### Aufgabe

Es ist die Aufgabe der vorliegenden Erfindung eine steckbare Radanordnung, beispielsweise für einen Rollator, bereitzustellen. Eine solche steckbare Radanordnung erlaubt es, beispielsweise bei einem Rollator, die Spurbreite zu vergrößern oder zu verringern bzw. zu verkleinern, indem die Räder beidseitig an einer Profilleiste, beispielsweise des Rollators, montierbar, insbesondere einsteckbar, sind.

### Lösung

Die Aufgabe wird durch die in Patentanspruch 1 angegebenen technischen Merkmale gelöst.

Es ist eine steckbare Radanordnung vorgesehen. Die steckbare Radanordnung weist wenigstens ein Rad, wenigstens eine Profilleiste, wenigstens eine Steckachse und wenigstens eine Arretiereinheit auf, wobei das wenigstens eine Rad mit der wenigstens einen Steckachse verbindbar ausgebildet ist. Die wenigstens eine Profilleiste weist wenigstens eine Durchgangsöffnung senkrecht zur Mantelfläche und/oder Oberfläche der wenigstens einen Profilleiste auf. Die wenigstens eine Steckachse ist durch die wenigstens eine Durchgangsöffnung der wenigstens einen Profilleiste durchsteckbar ausgebildet, wobei die wenigstens eine Steckachse an der wenigstens einen Profilleiste von jeder Seite der wenigstens einen Profilleiste arretierbar ist. Die wenigstens eine Profilleiste weist wenigstens eine Wölbung auf, wobei die wenigstens eine Wölbung von der Oberfläche der wenigstens einen Profilleiste aus nach Innen und/oder Außen hineinragend und/oder herausragend ausgebildet ist, wobei die Wölbung konzentrisch zur Durchgangsöffnung ausgebildet ist.

Unter der Angabe der Anzahl mit "wenigstens ein", ist entweder die Verwendung von genau einem Element oder zwei Elementen oder drei Elementen oder vier Elementen oder fünf Elementen oder einer anderen ganzzahligen Vielzahl an Elementen zu verstehen.

Von jeder Seite der wenigstens einen Profilleiste arretierbar heißt, dass die wenigstens eine Steckachse sowohl von der einen Seite als auch von der anderen Seite an der wenigstens einen Profilleiste durchsteckbar und arretierbar ist. Gleiches gilt sodann auch für das wenigstens eine Rad, welches mit der wenigstens einen Steckachse verbindbar ist.

Vorteilhaft kann ein Rollator aus vier erfindungsgemäßen, steckbaren Radanordnungen ausgebildet sein, wobei die entsprechenden Radanordnungen nach Patentanspruch 1 ausgebildet sind. Wenigstens zwei erfindungsgemäßen, steckbaren Radanordnungen sind im Wesentlichen paarweise nebeneinander angeordnet. Die so entstandenen Paare können hintereinander oder nebeneinander angeordnet sein.

Vorteilhaft können die erfindungsgemäßen, steckbaren Radanordnungen durch Profilleisten miteinander verbindbar ausgebildet sein. Die Ausbildung von Verbindungen mit beispielsweise Stahlseilen oder ähnlichen Verbindungselemente ist ebenfalls möglich.

Vorteilhaft kann wenigstens eine erfindungsgemäße, steckbare Radanordnung an wenigstens einer weiteren erfindungsgemäßen, steckbaren Radanordnung angeordnet sein. Kombinationen aus wenigstens zwei aneinander angeordneten erfindungsgemäßen, steckbaren Radanordnungen können im Wesentlichen nebeneinander oder hintereinander angeordnet sein. Die so entstandenen Kombinationen können hintereinander oder nebeneinander angeordnet sein.

Vorteilhaft kann ein Rollator aus wenigstens zwei erfindungsgemäßen, steckbaren Radanordnungen ausgebildet sein. Die wenigstens zwei erfindungsgemäßen, steckbaren Radanordnungen sind im Wesentlichen paarweise nebeneinander angeordnet. Der Rollator weist eine Kombination aus wenigstens zwei weiteren Radanordnungen auf, die bereits eine kleinere Spurbreite ausbilden, damit der Betrieb im Innenraum möglich ist. Dabei ist die Spurbreite immer als Abstand zwischen wenigstens zwei Rädern definiert. Ob die Spurbreite vergrößert oder verringert wird, ist davon abhängig auf welcher Seite der wenigstens einen Profilleiste das wenigstens eine Rad gesteckt wird. Ist das wenigstens eine Rad in der ersten Steckposition, auch Außenposition genannt, angeordnet, ist eine vergrößerte Spurbreite ausgebildet. Ist das wenigstens eine Rad in der zweiten Steckposition, auch Innenposition genannt, angeordnet, ist eine verringerte Spurbreite ausgebildet

Vorteilhaft ist das wenigstens eine Rad an einem freien Ende der wenigstens einen Profilleiste anordnenbar bzw. verbindbar. Dabei ist das wenigstens eine Rad vorteilhaft in beide Laufrichtungen ebenfalls drehbar. So kann die Radanordnung mit dem wenigstens einen Rad vorwärts und rückwärts bewegt werden. Das Rad bildet einen Freilauf aus.

Das wenigstens eine Rad ist an einem freien Ende der wenigstens einen Steckachse anordnenbar bzw. verbindbar. Ist das wenigstens eine Rad mit der wenigstens einen Steckachse verbunden, so sind vorteilhaft das wenigstens eine Rad und die wenigstens eine Steckachse drehbar miteinander verbunden, sodass keine Drehbewegung von einer Komponenten auf die andere, das heißt von dem Rad auf die Steckachse und umgekehrt, übertragbar ist.

Vorteilhaft ist das wenigstens eine Rad über wenigstens ein Lager mit der wenigstens einen Steckachse verbindbar. Das wenigstens eine Lager kann als Kugellager ausgebildet sein. Durch die Möglichkeit der steckbaren Anbringung der wenigstens einen Steckachse mit oder ohne des wenigstens einen Rads an die wenigstens eine Profilleiste ist die wenigstens eine Steckachse mit oder ohne dem wenigstens eine Rad leicht und schnell an die wenigstens eine Profilleiste montierbar. So kann sie zum Beispiel schnell und einfach gewechselt oder umgesteckt werden. Die wenigstens eine Arretiereinheit hält die wenigstens eine Steckachse nach der steckbaren Anbringung in ihrer Position an der wenigstens einen Profilleiste.

Vorteilhaft ist der Innendurchmesser des wenigstens einen Lagers nahezu gleich zu dem Außendurchmesser der Steckachse ausgebildet. Es ist entsprechend eine Passung ausgebildet, die entweder als Spielpassung oder als Presspassung ausgebildet sein kann. Ob eine Spiel- oder eine Presspassung vorliegt, ist von dem Verhältnis des Innendurchmessers des Lagers und dem Außendurchmesser der Steckachse abhängig, wobei die genaueren Zusammenhänge einem Fachmann bekannt sind und diese hier aus diesem Grund nicht genauer ausgeführt werden.

Vorteilhaft kann die wenigstens eine Wölbung als Erhöhung ausgebildet sein. Dabei folgt die Innenform der wenigstens einen Wölbung der Form der wenigstens einen Durchgangsöffnung. Damit kann die Kraftverteilung auf die wenigstens eine Steckachse, die durch die wenigstens eine Durchgangsöffnung durchsteckbar ausgebildet ist, durch die größere Auflagefläche besser verteilt werden. Zusätzlich kann die wenigstens eine Steckachse länger ausgebildet sein. Zusätzlich kann die wenigstens eine Steckachse derart ausgebildet sein, dass sie nicht über die wenigstens eine Wölbung auf jeder Seite der wenigstens einen Profilleiste seitlich übersteht. Damit ist auch eine schutzgeschützte Montage der wenigstens einen Steckachse in der wenigstens einen Profilleiste möglich.

Vorteilhaft kann die wenigstens eine Wölbung als Senkung ausgebildet sein. Dabei folgt die Innenform der wenigstens einen Wölbung der Form der wenigstens einen Durchgangsöffnung. Damit kann die Kraftverteilung auf die wenigstens eine Steckachse, die durch die wenigstens eine Durchgangsöffnung durchsteckbar ausgebildet ist, durch die größere Auflagefläche besser verteilt werden. Zusätzlich kann die wenigstens eine Steckachse kürzer ausgebildet sein. Zusätzlich kann die wenigstens eine Steckachse derart ausgebildet sein, dass sie nicht über die wenigstens eine Profilleiste seitlich übersteht. Damit ist auch eine schutzgeschützte Montage der wenigstens einen Steckachse in der wenigstens einen Profilleiste möglich.

Es ist sicherzustellen, dass die wenigstens eine Steckachse durch die wenigstens eine Durchgangsöffnung und die wenigstens eine Wölbung steckbar ist. Zudem dürfen keine Probleme bedingt durch die gewählten Formen der wenigstens einen Durchgangsöffnung und der wenigstens einen Steckachse entstehen, wie sie beispielsweise bei der Montage des wenigstens einen Rads auf der wenigstens einen Steckachse auftreten könnten.

Vorteilhaft kann die äußere Form der wenigstens einen Wölbung kreisförmig oder oval oder polygonförmig oder sternförmig ausgebildet sein. Vorteilhaft ist die äußere Form der wenigstens einen Wölbung als Kombination aus wenigstens einer Teilform ausgebildet, wobei die wenigstens eine Teilform kreisförmig oder oval oder polygonförmig oder sternförmig ausgebildet sein kann.

Vorteilhaft kann die wenigstens eine Profilleiste kreisförmig oder oval oder elliptisch oder polygonförmig oder sternförmig, vorteilhafter kreisförmig oder oval oder elliptisch oder polygonförmig ausgebildet sein.

Vorteilhaft kann die Profilleiste aus Kunststoff oder auch faserverstärktem Kunststoff oder Metall oder Carbon gefertigt sein.

Vorteilhaft kann die wenigstens eine Profilleiste als Profilrohr ausgebildet sein.

Vorteilhaft kann die wenigstens eine Profilleiste wenigstens eine Führungsrille an wenigstens einer Seite der wenigstens einen Profilleiste aufweisen. Vorteilhaft kann die wenigstens eine Führungsrille als Aufschiebeführung ausgebildet sein. Mit der wenigstens einen Führungsrille kann beispielsweise wenigstens eine Schützhülle oder Schutzprofil montiert werden.

Vorteilhaft kann das wenigstens eine Rad in seiner Größe variabel ausgebildet sein. Sind mehrere Räder vorhanden, dann sind wenigstens nebeneinanderliegende Räder in ihrer Größe im Wesentlichen gleich ausgebildet.

Vorteilhaft kann das wenigstens eine Rad in seinem Profil variabel ausgebildet sein. Sind mehrere Räder vorhanden, dann sind wenigstens nebeneinanderliegende Räder ihr Profil betreffend im Wesentlichen gleich ausgebildet.

In einer weiteren vorteilhaften Ausgestaltung der Erfindung kann die wenigstens eine Steckachse kreisförmig oder oval oder elliptisch oder polygonförmig oder sternförmig, vorteilhafter kreisförmig oder oval oder elliptisch oder polygonförmig ausgebildet sein.

Vorteilhaft ist die wenigstens eine Steckachse im Radbereich kreisförmig ausgebildet. Damit kann eine einfache Montage der Lager sowie das Aufbringen eines Außengewindes ermöglicht werden.

Weiterhin ist vorteilhaft die Durchgangsöffnung mit Hilfe einer Form gestanzt oder geschnitten, beispielsweise mit einem Laser- oder Wasserstrahlschneidegerät oder gebohrt und/oder anschließend entgratet ausgebildet.

Vorteilhaft kann die wenigstens eine Durchgangsöffnung kreisförmig oder oval oder elliptisch oder polygonförmig oder sternförmig ausgebildet sein.

Vorteilhaft sind die Formen der wenigstens einen Steckachse und der wenigstens einen Durchgangsöffnung gleich ausgebildet.

Vorteilhaft weisen die Abmessungen der Querschnitte der wenigstens einen Steckachse und der wenigstens einen Durchgangöffnung einen ähnlichen Wert auf. Dabei entspricht der Querschnitt der wenigstens einen Steckachse der Fläche, die senkrecht zur Längsrichtung der Steckachse angeordnet ist.

Noch vorteilhafter bilden die Abmessungen der Querschnitte der wenigstens einen Steckachse und der wenigstens einen Durchgangsöffnung eine Spielpassung aus. Das bedeutet, dass der Durchmesser der wenigstens einen Durchgangsöffnung so groß ist, dass die wenigstens eine Steckachse hindurchgesteckt werden kann. Dabei entspricht der Außendurchmesser der wenigstens einen Steckachse im Wesentlichen dem Durchmesser der wenigstens einen Durchgangsöffnung, wobei im Wesentlichen bedeutet, dass zwischen diesen eine Passtoleranz vorgesehen ist, so wie sie für die Dimensionierung von Spielpassungen fachüblich ist. In diesem Fall kann dies je nach Größe des Außendurchmessers der Steckachse wenige Hundertstelmillimeter bis Zehntelmillimeter betragen.

Vorteilhafte Weiterbildungen finden sich in den Unteransprüchen.

In einer vorteilhaften Ausgestaltung der Erfindung nach Patentanspruch 2 ist vorgesehen, dass wenigstens eine Wölbung an der wenigstens einen Profilleiste auf jeder Seite der wenigstens einen Durchgangsöffnung der wenigstens einen Profilleiste angeordnet ist. Damit kann die wenigstens eine Steckachse von beiden Seiten der wenigstens einen Profilleiste derart in die wenigstens eine Profilleiste und die wenigstens eine Wölbung eingesteckt werden, dass die wenigstens eine Steckachse seitlich nicht über die wenigstens eine Profilleiste und/oder die wenigstens eine Wölbung übersteht.

In einer vorteilhaften Ausgestaltung der Erfindung nach Patentanspruch 3 ist vorgesehen, dass das wenigstens eine Rad mit der wenigstens einen Steckachse von jeder Seite der Profilleiste in die jeweils wenigstens eine Durchgangsöffnung der wenigstens einen Profilleiste und/oder der wenigstens einen Wölbung einsteckbar ist, wodurch das wenigstens eine Rad in eine erste Steckposition und eine zweite Steckposition verbringbar ist. Dabei ist die erste Steckposition, auch Außenposition genannt, dadurch gekennzeichnet, dass das wenigstens eine Rad außen an der wenigstens einen Profilleiste angeordnet ist. Die zweite Steckposition, auch Innenposition genannt, ist dagegen dadurch gekennzeichnet, dass das wenigstens eine Rad innen an der wenigstens einen Profilleiste angeordnet ist.

In einer vorteilhaften Ausgestaltung der Erfindung nach Patentanspruch 4 ist vorgesehen, dass eine Veränderung der Spurbreite durch ein Umstecken des wenigstens einen Rads von einer ersten Steckposition in eine zweite Steckposition und/oder umgekehrt bewirkbar ist und/oder wenigstens ein Anschlag auf der dem wenigstens einen Rad zugewandten Seite der wenigstens einen Steckachse angeordnet ist, wobei der wenigstens eine Anschlag das wenigstens eine Rad von der wenigstens einen Wölbung und/oder der wenigstens einen Profilleiste beabstandet und/oder der wenigstens eine Anschlag derart ausgebildet ist, dass die wenigstens eine Steckachse in jeder Steckposition seitlich der Profilleiste und/oder Wölbung nicht übersteht.

Dabei ist die erste Steckposition, auch Außenposition genannt, dadurch gekennzeichnet, dass das wenigstens eine Rad außen an der wenigstens einen Profilleiste angeordnet ist. Die zweite Steckposition, auch Innenposition genannt, ist dagegen dadurch gekennzeichnet, dass das wenigstens eine Rad innen an der wenigstens einen Profilleiste angeordnet ist.

Werden auf beiden Seiten eines Rollators die Räder entsprechend in ihrer Steckposition um ca. 180° verlagert bzw. umgesteckt, das heißt zum Beispiel von einer Innenposition in eine Außenposition überführt, so wird der Abstand der Räder um insgesamt ca. 180 mm vergrößert. Man spricht in diesem Fall von einer Spurbreitenvergrößerung um ca. 180 mm, was einen deutlich stabileren und sicheren Stand des Rollators ermöglicht, sodass dieser im Außenbereich eingesetzt werden kann.

Werden die Räder jeweils in eine Innenposition überführt, so wird insgesamt die Spurbreite um ca. 180 mm verringert, was den Einsatz in engen Innenräumen deutlich erleichtert. Gleichzeitig können sich die Räder durch ihre innenliegenden Position nicht mit beispielsweise Türkanten oder Möbelkanten verhaken. Bei einer möglichen Kollision des Rollators mit Hindernissen berühren sich lediglich die Profilrohre mit der Schutzleiste, wodurch der Zusammenstoß abgefedert und abgeleitet wird. Dies erhöht zusätzlich die Sicherheit des Rollators in Innenräumen.

Vorteilhaft ist der wenigstens eine Anschlag, welcher auf der Steckachse angeordnet ist, fest oder vorteilhafter demontierbar mit der Steckachse verbindbar. Ist der wenigstens eine Anschlag, beispielsweise in Form einer Distanzbuchse, demontierbar mit der wenigstens einen Steckachse verbunden, also beispielsweise angeschraubt oder gesteckt oder verpresst, kann bei beispielsweise Versagen oder Verschleiß des wenigstens einen Anschlags, dieser jederzeit ohne großen Aufwand oder große Kosten ausgetauscht werden. Analog ist bei Versagen oder Verschleiß die wenigstens eine Steckachse jederzeit ohne großen Aufwand oder große Kosten austauschbar.

Vorteilhaft ist dadurch, dass der wenigstens ein Anschlag auf der dem wenigstens einen Rad zugewandten Seite der wenigstens einen Steckachse angeordnet ist, wobei der wenigstens eine Anschlag das wenigstens eine Rad von der wenigstens einen Wölbung und/oder der wenigstens einen Profilleiste beabstandet, das wenigstens eine Rad stets so montierbar, dass ein freier Lauf des wenigstens einen Rads gewährleistet werden kann. Das bedeutet, dass durch die Beabstandung sichergestellt wird, dass die Bewegung des wenigstens einen Rads nicht durch andere Komponenten der Radanordnung beeinträchtigt wird. Davon ist eine mögliche Bremseinrichtung ausgenommen.

Je nach Länge der wenigstens einen Steckachse und der Positionierung des wenigstens einen Anschlags auf der wenigstens einen Steckachse kann diese so ausgebildet sein, dass die wenigstens eine Steckachse seitlich nicht über die wenigstens eine Profilleiste und die wenigstens eine Wölbung übersteht.

Vorteilhaft ist an der wenigstens einen Steckachse wenigstens ein Anschlag angeordnet. Besonders vorteilhaft ist der wenigstens eine Anschlag auf der dem wenigstens einen Rad zugewandten Seite der wenigstens einen Steckachse angeordnet. Mit Hilfe des wenigstens einen Anschlags kann das wenigstens eine Rad von der wenigstens einen Wölbung und/oder der wenigstens einen Profilleiste beabstandet werden. Damit ist es möglich eine freie Rotation des wenigstens einen Rads zu gewährleisten.

Vorteilhaft kann der wenigstens eine Anschlag als Distanzbuchse oder Distanzhülse ausgebildet sein.

Vorteilhaft ist der wenigstens eine Anschlag, beispielsweise in Form einer Distanzbuchse, durch einen Bediener lösbar ausgebildet. Das Lösen des Anschlags kann vorteilhaft beispielsweise durch die Integration einer Löseeinheit durchführbar sein. Diese Löseeinheit kann beispielsweise als Federknopf und/oder Druckknopf ausgebildet sein. Weiterhin kann die Löseeinheit beispielsweise auf der Radseite angeordnet sein.

Vorteilhaft ist der Anschlag in seinem Querschnitt zumindest teilweise polygonförmig oder elliptisch oder kreisförmig oder sternförmig ausgebildet.

Vorteilhaft ist der wenigstens eine Anschlag, beispielhaft in Form einer Distanzbuchse, der auf dem wenigstens einen Rad abgewandten Seite der wenigstens einen Profilleiste angeordnet ist, auf die wenigstens eine Wölbung formschlüssig aufschiebbar ausgebildet.

Vorteilhaft weist der wenigstens eine Anschlag, beispielhaft in Form einer Distanzbuchse, der auf dem wenigstens einen Rad abgewandten Seite der wenigstens einen Profilleiste angeordnet ist, wenigstens eine Ausnehmung auf mit der die äußere Mantelfläche der wenigstens einen Wölbung eine Spielpassung ausbildet ausgebildet.

Vorteilhaft liegt der wenigstens eine Anschlag in der eingesteckten Form der wenigstens einen Steckachse an der Mantelfläche der wenigstens einen Profilleiste an.

Vorteilhaft kann der wenigstens eine Anschlag, beispielsweise in Form einer Distanzhülse, formschlüssig auf die wenigstens eine Wölbung aufgesteckt werden. Zusätzlich kann dadurch sichergestellt werden, dass der wenigstens eine Anschlag kein Klappergeräusch oder ein anderes störendes Geräusch während einer Benutzung der wenigstens einen steckbaren Radanordnung erzeugt.

Vorteilhaft ist die Verbindung der wenigstens einen Wölbung mit dem wenigstens einen Anschlag als Spielpassung ausgebildet. Damit sind geringfügige Fertigungstoleranzen des wenigstens einen Anschlags oder der wenigstens einen Wölbung ausgleichbar. Besonders bei einem Austausch des wenigstens einen Anschlags bedingt durch beispielsweise Verschleiß oder Beschädigung ist das vorteilhaft, da so Kosten und Fertigungsaufwand eingespart werden können.

In einer weiteren vorteilhaften Ausgestaltung der Erfindung ist vorgesehen, dass mit wenigstens einem Klemmring das wenigstens eine Rad auf der wenigstens einen Steckachse zwischen dem wenigstens einen Anschlag, der beispielhaft als Distanzbuchse ausgebildet sein kann, und dem wenigstens einen Klemmring an den Auflageflächen der beispielsweise wenigstens zwei Lager unter Berücksichtigung eines Längsspiels montierbar ausgebildet.

Vorteilhaft ist am äußeren Ende der wenigstens einen Steckachse der dem wenigstens einen Rad zugewandten Seite der wenigstens einen Steckachse ein Außengewinde ausgebildet. Vorteilhaft weist dieses Außengewinde einen zu dem Innengewinde des wenigstens einen Klemmrings passenden Durchmesser auf. Damit ist eine sichere Montage des wenigstens einen Rads auf der wenigstens einen Steckachse möglich.

Vorteilhaft kann das Längsspiel des wenigstens einen Rads auf der wenigstens einen Steckachse, das zwischen dem wenigstens einen Anschlag und dem wenigstens einen Klemmring platziert ist, durch die Platzierung des wenigstens einen Klemmrings auf dem Außengewinde der wenigstens Steckachse einstellbar ausgebildet sein.

Vorteilhaft ist mit wenigstens einem Klemmring das wenigstens eine Rad auf der wenigstens einen Steckachse zwischen dem wenigstens einen Profilrohr, vorteilhafter der wenigstens einen Wölbung und dem wenigstens einen Klemmring an den Auflageflächen der beispielsweise wenigstens zwei Lager unter Berücksichtigung eines Längsspiels montierbar ausgebildet.

Vorteilhaft kann das Längsspiel des wenigstens einen Rads auf der wenigstens einen Steckachse, das zwischen dem wenigstens einen Profilrohr, vorteilhafter der wenigstens einen Wölbung und dem wenigstens einen Klemmring platziert ist, durch die Platzierung des wenigstens einen Klemmrings auf dem Außengewinde der wenigstens Steckachse einstellbar ausgebildet sein.

Vorteilhaft kann der wenigstens eine Klemmring als Sechskantmutter ausgebildet sein.

In einer vorteilhaften Ausgestaltung der Erfindung nach Patentanspruch 5 ist vorgesehen, dass die wenigstens eine Profilleiste als Profilrohr oder als mit einem Gitter gefüllte Stange ausgebildet ist.

Vorteilhaft ist das wenigstens eine Profilrohr und/oder die wenigstens eine mit einem Gitter gefüllte Stange kreisförmig oder oval oder elliptisch oder polygonförmig oder sternförmig, vorteilhafter kreisförmig oder oval oder elliptisch oder polygonförmig ausgebildet.

Vorteilhaft weist das Gitter, mit dem die wenigstens eine mit einem Gitter gefüllte Stange ausgebildet ist, einen polygonförmigen oder elliptischen oder kreisförmigen oder sternförmigen Querschnitt auf. Wiederum vorteilhaft weist das Gitter, mit dem die wenigstens eine mit einem Gitter gefüllte Stange ausgebildet ist, eine dreidimensionale Lattice-Struktur auf, wie beispielsweise eine Weaire-Phelan- oder Honeycomp-Struktur. Dies ist nicht einschränkend zu verstehen, da auch weitere dem Fachmann bekannten, dreidimensionalen Lattice-Strukturen verwendbar sind.

In einer vorteilhaften Ausgestaltung der Erfindung nach Patentanspruch 6 ist vorgesehen, die wenigstens eine Wölbung und die wenigstens eine Arretiereinheit eine Arretierung ausbilden und/oder als Arretiermodul ausgebildet sind.

Durch die Ausbildung der Arretierung und/oder des Arretiermoduls durch die wenigstens eine Wölbung und die wenigstens eine Arretiereinheit wird eine besonders gute Handhabbarkeit erreicht, wobei auch die Austauschbarkeit einzelner Komponenten erleichtert wird. Ist die Arretiereinheit beispielsweise verschlissen, kann diese ausgetauscht werden, ohne die gesamte Arretierung und/oder das gesamte Arretiermodul zu ersetzen. Das ist nachhaltig und spart Kosten.

Vorteilhaft kann die wenigstens eine Arretiereinheit in Form von wenigstens einem Federknopf und/oder wenigstens einem Druckknopf oder wenigstens einem Haltebügel oder wenigstens einer Kombination aus einer Feder und einem Stift oder weiteren dem Fachmann bekannten federbasierten oder auf federähnlichen Aufbauten basierende Vorrichtungen ausgebildet sein.

In einer vorteilhaften Ausgestaltung der Erfindung nach Patentanspruch 7 ist vorgesehen, dass die wenigstens eine Arretiereinheit auf der dem Rad abgewandten Seite der Steckachse angeordnet ist. Die wenigstens eine Arretiereinheit befindet sich entsprechend an einem freien Ende der wenigstens einen Steckachse. Damit ist die wenigstens eine Steckachse mit der Seite an der die wenigstens eine Arretiereinheit angeordnet ist durch die wenigstens eine Durchgangsöffnung der jeweils wenigstens einen Profilleiste und der wenigstens einen Wölbung durchsteckbar. Dabei kann in Abhängigkeit der Länge der wenigstens einen Steckachse und der Positionierung der wenigstens einen Arretiereinheit auf der wenigstens einen Steckachse das wenigstens eine Arretiermodul bestehend aus der wenigstens einen Arretiereinheit und der wenigstens einen Profilleiste, vorteilhafter der wenigstens einen Wölbung so ausgebildet sein, dass die wenigstens eine Steckachse seitlich nicht über die wenigstens eine Profilleiste und/oder die wenigstens eine Wölbung übersteht.

In einer vorteilhaften Ausgestaltung der Erfindung nach Patentanspruch 8 ist vorgesehen, dass die wenigstens eine Wölbung je Seite der wenigstens einen Profilleiste wenigstens eine der Form der wenigstens einen Arretiereinheit entsprechende umlaufende Ringnut im Inneren der wenigstens einen Profilleiste ausbilden und/oder die wenigstens eine Wölbung je Seite der wenigstens einen Profilleiste wenigstens eine der Form der wenigstens einen Arretiereinheit entsprechende umlaufende Ringnut in der inneren und/oder äußeren Mantelfläche der wenigstens einen Wölbung aufweist.

Bilden die wenigstens eine Wölbung je Seite der wenigstens einen Profilleiste wenigstens eine der Form der wenigstens einen Arretiereinheit entsprechende umlaufende Ringnut im Inneren der wenigstens einen Profilleiste, kann die wenigstens eine Arretierung und/oder das wenigstens eine Arretiermodul bestehend aus der wenigstens einen Wölbung und der wenigstens einen Arretiereinheit durch die Platzierung des wenigstens einen Verschlussmechanismus innerhalb der wenigstens einen Profilleiste nicht sichtbar und/oder schmutzgeschützt ausgebildet ist. Dabei entspricht die umlaufende Ringnut einem Ringförmigen Hohlraum zwischen den beiden Wölbungen.

Vorteilhaft weist die wenigstens eine Wölbung je Seite der wenigstens einen Profilleiste wenigstens eine der Form der wenigstens einen Arretiereinheit entsprechende umlaufende Ringnut in der inneren und/oder äußeren Mantelfläche der wenigstens einen Wölbung auf. Das bedeutet, dass die wenigstens eine Arretierung und/oder das wenigstens eine Arretiermodul bestehend aus der wenigstens einen Wölbung und der wenigstens einen Arretiereinheit durch die Platzierung des wenigstens einen Verschlussmechanismus innerhalb der wenigstens einen Wölbung bzw. der wenigstens einen Profilleiste nicht sichtbar und/oder schmutzgeschützt ausgebildet ist.

In den genannten vorteilhaften Ausführungsformen der wenigstens einen Arretierung und/oder des wenigstens einen Arretiermoduls entspricht das Außenmaß der wenigstens einen Arretiereinheit im Wesentlichen den Abmessungen der wenigstens einen Ringnut, wobei im Wesentlichen bedeutet, dass zwischen diesen eine Passtoleranz vorgesehen ist, so wie sie für die Dimensionierung von Spielpassungen fachüblich ist. In diesem Fall kann dies je nach Größe des Außenmaßes der Arretiereinheit wenige Hundertstelmillimeter bis Zehntelmillimeter betragen. Damit können

Fertigungsabweichungen einfach ausgeglichen werden.

In einer vorteilhaften Ausgestaltung der Erfindung nach Patentanspruch 9 ist vorgesehen, dass die wenigstens eine Arretiereinheit als Einsatz in die wenigstens eine Profilleiste einschiebbar und/oder einsetzbar ausgebildet ist und/oder die wenigstens eine Arretiereinheit über wenigstens ein Verbindungselement mit der wenigstens einen Löseeinheit verbindbar ausgebildet ist und/oder die wenigstens eine Arretiereinheit gemeinsam mit dem wenigstens einen Verbindungselement und der wenigstens einen Löseeinheit wenigstens eine Arretierung und/oder als wenigstens ein Arretiermodul ausgebildet sind und/oder die wenigstens eine Löseeinheit wenigstens eine Durchgangsbohrung aufweist, wobei die wenigstens eine Durchgangsbohrung als Doppelbohrung mit zwei sich unterscheidenden Durchmessern ausgebildet ist.

Dabei entspricht die Form der wenigstens einen Arretiereinheit in ihrer Längserstreckung der Form der inneren Aushöhlung der wenigstens einen Profilleiste in ihrer Längserstreckung. Vorteilhaft wird somit eine Passung ausgebildet. Besonders vorteilhaft wird eine Spielpassung ausgebildet. Damit kann die wenigstens eine Arretiereinheit möglichst einfach innerhalb der wenigstens einen Profilleiste verschoben werden.

Das wenigstens eine Verbindungselement ist vorteilhaft als Federelement ausgebildet. Beispielhaft kann das Federelement als Spiralfeder oder als Schraubenfeder ausgebildet sein. Vorteilhaft erlaubt das wenigstens eine Verbindungselement die Bewegung der wenigstens einen Löseeinheit gegenüber der wenigstens einen Arretiereinheit in der Längserstreckung der wenigstens einen Profilleiste. Besonders vorteilhaft überführt das wenigstens eine Verbindungselement die wenigstens eine Löseeinheit von einer ersten Schiebeposition, auch Entriegelungsposition genannt, in eine zweite Position, auch Verriegelungsposition genannt. Die Überführung der wenigstens einen Löseeinheit in die zweite Schiebeposition erfolgt besonders vorteilhaft von selbst. Die wenigstens eine Arretierung und/oder das wenigstens eine Arretiermodul bestehend aus wenigstens einer Arretiereinheit und wenigstens einem Verbindungselement und wenigstens einer Löseeinheit ist also selbstarretierend ausgebildet.

Der größere Durchmesser der Doppelbohrung ist vorteilhaft derart ausgebildet, dass die Steckachse hindurch steckbar ist. Der kleinere Durchmesser ist dagegen vorteilhaft so bemessen, dass ein Durchstecken der Steckachse verhindert wird. Die unterschiedlich großen Durchmesser der Doppelbohrungen überschneiden sich derart, dass die kleinere Bohrung an ihrer breitesten Stelle, die gleichzeitig dem kleineren Durchmesser entspricht, in die größere Bohrung mit dem größeren Durchmesser übergeht.

In einer vorteilhaften Ausgestaltung der Erfindung nach Patentanspruch 10 ist vorgesehen, dass die wenigstens eine Steckachse eine umlaufende Ringnut aufweist.

In einer weiteren vorteilhaften Ausführungsform weist die wenigstens eine Steckachse beidseitig entlang ihrer Längserstreckung jeweils eine Ringnut auf, sodass die wenigstens eine Steckachse insgesamt zwei Ringnuten aufweist.

Vorteilhaft ist der Durchmesser der Mantelfläche der wenigstens einen Ringnut kleiner als der der Außendurchmesser der wenigstens einen Steckachse ausgebildet.

Dabei dient die wenigstens eine Ringnut dazu, die wenigstens eine Steckachse mit Hilfe der wenigstens einen Löseeinheit und der wenigstens einen Durchgangsöffnung der wenigstens einen Profilleiste zu fixieren. Dabei wird die wenigstens eine Doppelbohrung der wenigstens einen Löseeinheit genutzt, um die wenigstens eine Steckachse senkrecht zur Mantelfläche und/oder Oberfläche der wenigstens einen Profilleiste in Position zu halten. Vorteilhaft wird eine Passung zwischen dem ersten bzw. kleinen Durchmesser der wenigstens einen Doppelbohrung und der Mantelfläche der wenigstens einen Ringnut der wenigstens einen Steckachse ausgebildet. Vorteilhafter wird eine Spielpassung ausgebildet.

Vorteilhaft bilden der Außendurchmesser der wenigstens einen Steckachse und die wenigstens eine Durchgangsöffnung der wenigstens einen Profilleiste ebenfalls eine Passung aus. Dabei ist es erneut von Vorteil, wenn eine Spielpassung ausgebildet wird.

Vorteilhaft betragen die Toleranzen der beide erläuterten Spielpassungen je nach Größe des Außenmaßes der der wenigstens einen Ringnut und/oder des Außendurchmessers der wenigstens einen Steckachse wenige Hundertstelmillimeter bis Zehntelmillimeter. Damit können Fertigungsabweichungen einfach ausgeglichen werden.

Vorteilhaft weist die Ringnut ein rechteckiges Rotationsprofil auf, wobei das rechteckige Rotationsprofil um die Rotationsachse, welche entlang der Längserstreckung der Steckachse verläuft, rotiert ist. Es ist aber auch alternativ denkbar, dass die Ringnut ein rundes, insbesondere ein halbkreisförmiges oder U-förmiges Rotationsprofil, oder ein V-förmiges Rotationsprofil aufweist.

In einer vorteilhaften Ausgestaltung der Erfindung nach Patentanspruch 11 ist vorgesehen, dass bei der wenigstens einen Doppelbohrung ein erster und ein zweiter Durchmesser vorgesehen sind, wobei der erste Durchmesser dem Außendurchmesser der wenigstens einen Ringnut der wenigstens einen Steckachse und der zweite Durchmesser dem Außendurchmesser der wenigstens einen Steckachse derart entspricht, dass die Durchmesser der Doppelbohrung und die jeweiligen Außendurchmesser der wenigstens einen Ringnut und der wenigstens einen Steckachse jeweils als Passung ausgebildet sind.

Das heißt, dass der erste Durchmesser so groß ist, dass die Steckachse hindurchgesteckt werden kann. Dabei entspricht der zweite Durchmesser im Wesentlichen dem Außendurchmesser der Steckachse, wobei im Wesentlichen bedeutet, dass zwischen diesen eine Passtoleranz vorgesehen ist, so wie sie für die Dimensionierung von Spielpassungen fachüblich ist. In diesem Fall kann dies je nach Größe des Außendurchmessers der Steckachse wenige Hunderstelmillimeter bis Zehntelmillimeter betragen. Gleiches gilt ebenfalls für das Verhältnis zwischen ersten Durchmesser und Außendurchmesser der Ringnut. Die Bohrung in dem wenigstens einen Profilrohr bildet ebenfalls mit dem Außendurchmesser der Steckachse eine Spielpassung aus.

In einer vorteilhaften Ausgestaltung der Erfindung nach Patentanspruch 12 ist vorgesehen, dass die wenigstens eine Löseeinheit wenigstens eine Senkung auf jeder Seite der wenigstens einen Löseeinheit aufweist, wobei die Form der wenigstens einen Senkung der Form der wenigstens einen Doppelbohrung folgend ausgebildet ist. Damit können scharfe Kanten vermieden werden. Zudem wird ein Einrasten der wenigstens einen Steckachse in die wenigstens eine Doppelbohrung der wenigstens einen Löseeinheit erleichtert.

In einer vorteilhaften Ausgestaltung der Erfindung nach Patentanspruch 13 ist vorgesehen, dass die wenigstens eine Profilleiste und die wenigstens eine Arretiereinheit wenigstens eine weitere Durchgangsöffnung aufweisen, wobei wenigstens ein Halteelement durch die wenigstens eine weitere Durchgangsöffnung der wenigstens einen Profilleiste und der wenigstens einen Arretiereinheit durchsteckbar ausgebildet ist.

Vorteilhaft ist die wenigstens eine weitere Durchgangsöffnung in ihrer Form kreisförmig oder oval oder elliptisch oder polygonförmig oder sternförmig ausgebildet.

Vorteilhaft ist die wenigstens eine Halteeinheit in ihrer Form kreisförmig oder oval oder elliptisch oder polygonförmig oder sternförmig ausgebildet. Besonders vorteilhaft ist die wenigstens eine Halteeinheit in ihrer Form gleich zur Form der wenigstens einen weiteren Durchgangsöffnung ausgebildet. Damit ist die wenigstens eine Halteeinheit durch die wenigstens eine weitere Durchgangsöffnung durchsteckbar ausgebildet.

Vorteilhaft bilden die wenigstens eine Halteeinheit und die wenigstens eine weitere Durchgangsöffnung eine Passung aus.

Besonders vorteilhaft wird dabei eine Presspassung ausgebildet. Damit ist die wenigstens eine Halteeinheit an der wenigstens einen Profilleiste und der wenigstens einen Arretiereinheit fixiert. Zudem ist kein weiteres Element nötig, um die wenigstens eine Arretiereinheit in ihrer Position zu halten. Besonders vorteilhaft kann die wenigstens eine Halteeinheit in ihrer Länge zu ausgebildet sein, dass sie seitlich nicht über die wenigstens eine Profilleiste übersteht.

Besonders vorteilhaft wird eine Spielpassung ausgebildet. Damit ist die wenigstens eine Halteeinheit an der wenigstens einen Profilleiste und der wenigstens einen Arretiereinheit fixiert. Allerdings ist eine Befestigung der wenigstens einen Halteeinheit möglich. Diese Befestigung kann beispielsweise als Sicherungsring oder Sprengring oder Sicherungsstab ausgebildet sein. Allerdings sind dafür wenigstens eine Ringnut oder Öse nötig. Zudem steht die wenigstens eine Halteeinheit seitlich über die wenigstens eine Profilleiste über.

In einer vorteilhaften Ausgestaltung der Erfindung nach Patentanspruch 14 ist vorgesehen, dass die wenigstens eine Arretierung und/oder das wenigstens eine Arretiermodul, welches an der Steckachse angeordnet ist, selbstarretierend ausgebildet ist. Unter selbstarretierend ist hier zu verstehen, dass das Arretiermodul ohne die Einwirkung eines Bedieners von einem gelösten in einen gesperrten oder arretierten Zustand überführbar ist.

Vorteilhaft ist das wenigstens eine Arretiermodul durch einen Bediener lösbar ausgebildet. Das Lösen des Arretiermoduls kann vorteilhaft beispielsweise durch die Integration eines Druckknopfes durchführbar sein. Dieser Druckknopf kann beispielsweise auf der Radseite angeordnet sein.

Es wird außerdem ein Rollator mit wenigstens einer steckbaren Radanordnung nach Patentanspruch 1 vorgesehen, wobei durch wenigstens eine steckbare Radanordnung eine Spurbreitenveränderung des Rollators bewirkbar ist.

Vorteilhaft kann ein Rollator aus wenigstens zwei erfindungsgemäßen, steckbaren Radanordnungen ausgebildet sein. Die wenigstens zwei erfindungsgemäßen, steckbaren Radanordnungen sind im Wesentlichen paarweise nebeneinander angeordnet. Der Rollator weist eine Kombination aus wenigstens einer weiteren Radanordnungen auf, damit der Betrieb im Innenraum möglich ist. Dabei ist die Spurbreite immer als Abstand zwischen wenigstens zwei Rädern definiert. Ob die Spurbreite vergrößert oder verringert wird, ist davon abhängig auf welcher Seite der wenigstens einen Profilleiste das wenigstens eine Rad gesteckt wird. Ist das wenigstens eine Rad in der ersten Steckposition, auch Außenposition genannt, angeordnet, ist eine vergrößerte Spurbreite ausgebildet. Ist das wenigstens eine Rad in der zweiten Steckposition, auch Innenposition genannt, angeordnet, ist eine verringerte Spurbreite ausgebildet

Vorteilhaft sind wenigstens zwei steckbare Radanordnungen vorgesehen, die gegenüberliegend angeordnet sind. Die Räder der gegenüberliegenden steckbaren Radanordnungen definieren hierbei die Spurbreite des Rollators, wobei die Spurbreite immer als Abstand zwischen wenigstens zwei Rädern definiert ist.

Wird nunmehr die Steckposition von wenigstens einem Rad verändert, so wird gleichzeitig eine Veränderung der Spurweite bewirkt. Das wenigstens eine Rad wird durch Veränderung der Steckposition entweder von innen nach außen oder umgekehrt verlagert. Bei einer symmetrischen Steckpositionsveränderung von wenigstens zwei Rädern sind folglich wenigstens die beiden Räder entweder außen oder innen bezogen auf den Rollator angeordnet.

Rollatoren, die für einen Einsatz draußen im Freien vorgesehen sind, weisen für einen stabilen und sicheren Halt eine breite Spurbreite auf. Demgegenüber weisen Rollatoren, die für den Innenbereich vorgesehen sind, eine schmalere Spurbreite auf, um komfortabel in Innenräumen bewegt werden zu können. Hierbei sind die Räder vorteilhaft nach innen verlagert, sodass eine schmalere Spurbreite eingestellt ist. Beim Einsatz für den Außenbereich sind die Räder vorteilhaft nach außen verlagert, um so eine größere Spurbreite bereitzustellen.

In einer vorteilhaften Ausführungsform beträgt bei einer steckbaren Radanordnung der Abstand zwischen Radmitte und Mitte des wenigstens einen Profilrohrs 45 mm, sodass beim Verlagern bzw. Umstecken des wenigstens einen Rads um 180° eine Verlagerung von 90 mm bezogen auf die Radmitte erfolgt. Werden auf beiden Seiten eines Rollators die Räder entsprechend in ihrer Steckposition um 180° verlagert bzw. umgesteckt, das heißt zum Beispiel von einer Innenposition in eine Außenposition überführt, so wird der Abstand der Räder um insgesamt 180 mm vergrößert. Man spricht in diesem Fall von einer Spurbreitenvergrößerung um 180 mm, was einen deutlich stabileren und sicheren Stand des Rollators ermöglicht, sodass dieser im Außenbereich eingesetzt werden kann.

Werden die Räder jeweils in eine Innenposition überführt, so wird insgesamt die Spurbreite um 180 mm verringert, was den Einsatz in engen Innenräumen deutlich erleichtert. Gleichzeitig können sich die Räder durch ihre innenliegenden Position nicht mit beispielsweise Türkanten oder Möbelkanten verhaken. Bei einer möglichen Kollision des Rollators mit Hindernissen berühren sich lediglich die Profilrohre mit der Schutzleiste, wodurch der Zusammenstoß abgefedert und abgeleitet wird. Dies erhöht zusätzlich die Sicherheit des Rollators in Innenräumen.

Vorteilhaft ist wenigstens eine Bremseinheit an einer wenigstens einen Haltemanschette angeordnet, wobei die wenigstens eine Haltemanschette an der wenigstens einen Profilleiste angeordnet ist und/oder die wenigstens eine Bremseinheit drehbar um die axiale Drehachse der wenigstens einen Profilleiste ausgebildet ist, wobei die wenigstens eine Haltemanschette als weitere Arretiereinheit ausgebildet ist und/oder die wenigstens eine Bremseinheit wenigstens eine Bremshülse mit mindestens einer daran angeordneten Bremsbacke aufweist und/oder die wenigstens eine Bremshülse mittels Zugkraftbeaufschlagung über wenigstens eine Bremsleitung verschiebbar ist, wobei die wenigstens eine Bremsleitung als ein Bowdenzug ausgebildet ist und wenigstens eine Seele sowie wenigstens eine Hülle umfasst.

Die wenigstens eine Bremseinheit kann mehrteilig ausgebildet sein. Das wenigstens eine Rad ist durch die wenigstens eine Bremseinheit abbremsbar. Das bedeutet, dass die Rotation des wenigstens einen Rads vorteilhaft bis zum Stillstand reduzierbar ist.

Vorteilhaft ist wenigstens eine Bremseinheit an wenigstens einer Profilleiste von wenigstens zwei gegenüberliegenden erfindungsgemäßen, steckbaren Radanordnungen ausgebildet.

Vorteilhaft ist die innere Form der wenigstens einen Haltemanschette an die äußere Form der wenigstens einen Profilleiste angepasst. Damit ist die wenigstens eine Haltemanschette auf die wenigstens eine Profilleiste montierbar.

Vorteilhaft ist die wenigstens eine Bremseinheit in ihrer Längserstreckung gegenüber der wenigstens einen Haltemanschette kürzer ausgebildet.

Vorteilhaft ist die innere Form der wenigstens einen Bremseinheit an die äußere Form der wenigstens einen Haltemanschette formschlüssig ausgebildet.

Vorteilhaft ist die wenigstens eine Haltemanschette auf die wenigstens eine Profilleiste aufschiebbar ausgebildet. Damit ist eine möglichst einfache Montage gewährleistbar.

Vorteilhaft kann die wenigstens eine Bremseinheit auf die wenigstens eine Haltemanschette aufgeschoben werden. Damit kann die wenigstens eine Bremseinheit einfach montiert werden.

Vorteilhafter ist die wenigstens einen Bremseinheit auf der wenigstens einen Haltemanschette werkzeuglos montierbar.

Vorteilhaft weist die wenigstens eine Profilleiste wenigstens eine weitere Durchgangsöffnung auf, wobei wenigstens ein Haltestift durch die wenigstens eine weitere Durchgangsöffnung durchsteckbar ist. Der wenigstens eine Haltestift ist als Halterung der wenigstens einen Haltemanschette auf der wenigstens einen Profilleiste ausgebildet.

Vorteilhaft kann der wenigstens eine Haltestift kreisförmig oder oval oder elliptisch oder polygonförmig oder sternförmig ausgebildet sein.

Vorteilhaft kann der wenigsten eine Haltestift auch als wenigstens ein Haltebolzen ausgebildet sein.

Die axiale Drehachse der wenigstens eine Profilleiste als Schnittachse der wenigstens zwei Symmetrieachsen der wenigstens einen Profilleiste in Längserstreckung der wenigstens einen Profilleiste ausgebildet.

Vorteilhaft ist die äußere Form der wenigstens einen Haltemanschette kreisförmig oder oval oder elliptisch oder polygonförmig oder sternförmig ausgebildet.

Vorteilhaft ist die äußere Form der wenigstens einen Haltemanschette als Kombination der vorangehenden Formen ausgebildet. Somit weist die wenigstens eine Haltemanschette wenigstens eine erste und wenigstens eine zweite Verschiebeposition für die wenigstens eine Bremseinheit auf. Dabei wird die wenigstens eine erste Verschiebeposition als Drehbereich und die wenigstens eine zweite Verschiebeposition als Arretierbereich bezeichnet. Durch das Ausnutzen einer formschlüssigen Verbindung zwischen der wenigstens einen Bremseinheit und der wenigstens einen Haltemanschette im wenigstens einen Arretierbereich und ein freies Rotieren im wenigstens einen Drehbereich ist ein werkzeugloser Drehvorgang möglich.

Vorteilhaft ist eine Drehung der wenigstens einen Bremseinheit um die axiale Drehachse der wenigstens einen Profilleiste möglich, wenn die wenigstens eine erfindungsgemäße steckbare Radverbindung nach Patentanspruch 1 ausgesteckt wird.

Die Funktion der wenigstens einen Haltemanschette kann in einer weiteren vorteilhaften Ausgestaltung der Erfindung auch durch wenigstens einen Haltebügel realisiert sein, der anstelle der wenigstens einen Haltemanschette zum Einsatz kommt.

Vorteilhaft kann die wenigstens eine weitere Arretiereinheit mehrteilig ausgebildet sein. Beispielsweise besteht die wenigstens eine weitere Arretiereinheit aus wenigstens einem ersten Kreisring, welcher fest mit der Profilleiste verbindbar ist, wenigstens einem frei rotierbaren zweiten Kreisring, welcher vorteilhaft in der Längserstreckung des wenigstens einen ersten Kreisrings kürzer ausgebildet ist. Dabei weist der wenigstens eine erste Kreisring wenigstens eine Rille auf, wobei der wenigstens eine zweite Kreisring über diese wenigstens eine Rille mit dem wenigstens einen ersten Kreisring verbindbar ausgebildet ist. Dabei ist durch den wenigstens einen ersten und den wenigstens einen zweiten Kreisring wenigstens ein Drehemelent ausbildbar. Die Rotation des wenigstens einen zweiten Kreisrings ist an wenigstens zwei sich gegenüberliegenden Position stoppbar. Dafür weisen der wenigstens eine erste Kreisring und/oder der wenigstens eine zweite Kreisring eine Durchgangsöffnung auf, in welche wenigstens eine Arretiervorrichtung steckbar ist. Diese wenigstens eine Arretiervorrichtung kann beispielsweise als Federknopf oder Arretierzylinder ausgebildet sein.

Vorteilhaft ist das wenigstens eine Drehelement durch einen Bediener leicht drehbar. Das bedeutet, dass im entriegelten Zustand der Arretiervorrichtung der wenigstens eine zweite Kreisring leicht gegenüber dem wenigstens einen ersten Kreisring verdrehbar ist. Dabei liegt der entriegelte Zustand der Arretiervorrichtung vor, wenn das wenigstens eine Rad aus der ersten Steckposition oder zweiten Steckposition entnommen wird und nicht länger in die wenigstens eine Profilleiste und/oder wenigstens eine Aufnahme eingesteckt ist.

Vorteilhaft beträgt der maximale Winkel, um welchen der wenigstens eine erste Kreisring gegenüber dem wenigstens einen zweiten Kreisring verdrehbar ist, 180°. Bei einer Drehung der Bremseinheit ist zu beachten, dass die wenigstens eine Hülle und/oder die wenigstens eine Seele nicht beschädigt werden.

Vorteilhaft ist an dem wenigstens einen zweiten Kreisring wenigstens ein Haltebügel angeordnet, welcher das Entriegeln der wenigstens einen Arretiervorrichtung durch den Benutzer erleichtert. Dabei kann der wenigstens eine Haltebügel die Drehung des wenigstens einen zweiten Kreisrings gegenüber dem wenigstens einen ersten Kreisring erleichtern. Vorteilhaft ist der erste Kreisring als Haltemanschette ausgebildet. Damit ist es möglich einem Bauteil durch Funktionsintegration mehrere Merkmale zuzuweisen und es müssen insgesamt weniger Einzelbauteile gefertigt werden, wodurch ein Austausch bei Versagen oder Verschleiß erleichtert wird.

Vorteilhaft ist der zweite Kreisring als Bremshülse ausgebildet. Damit ist es möglich einem Bauteil durch Funktionsintegration mehrere Merkmale zuzuweisen und es müssen insgesamt weniger Einzelbauteile gefertigt werden, wodurch ein Austausch bei Versagen oder Verschleiß erleichtert wird.

Bei einem Bremsvorgang wird die wenigstens eine Bremshülse mit der mindestens einen Bremsbacke in Richtung Rad verschoben, bis die Bremsbacke auf das Rad trifft und radial dagegen drückt. Hierdurch wird eine Reibungskraft zwischen Rad und Bremsbacke bewirkt, die wiederum zu einem Abbremsen des Rads führt. Das Wirkprinzip entspricht dem einer Stempelbremse.

Die wenigstens eine Bremsbacke erstreckt sich vorteilhaft in einer senkrecht zur Mantelfläche und/oder Oberfläche der wenigstens einen Profilleiste stehenden Ebene von der wenigstens einen Profilleiste nach außen weg. Sie ist gleichzeitig an der wenigstens einen Bremshülse verschiebbar gelagert. So kann die Bremsbacke entsprechend der Steckposition des Rads verschoben werden, sodass sich Bremsbacke und Rad auf der gleichen Seite des Profilrohrs befinden.

Die wenigstens eine Seele befindet sich hierbei wenigstens zum Teil innerhalb der wenigstens einen Hülle. Das äußere Ende der wenigstens einen Seele ist an dem äußeren Ende der wenigstens einen Bremseinheit befestigt. Die Befestigung erfolgt hierbei über wenigstens eine Aufnahme an der wenigstens einen Haltemanschette, in welche das äußere Ende der wenigstens einen Seele aufgenommen ist. Die wenigstens eine Hülle steht in Wirkverbindung mit der wenigstens einen Bremshülse.

Vorteilhaft kann das äußere Ende der wenigstens einen Seele in und/oder an wenigstens einem Bremsnippel befestigt werden.

Vorteilhaft ist der wenigstens Bremsnippel um die axiale Drehachse der wenigstens einen Profilleiste drehbar mit der wenigstens einen Haltemanschette verbunden. Dabei ist die axiale Drehachse der wenigstens eine Profilleiste als Schnittachse der wenigstens zwei Symmetrieachsen der wenigstens einen Profilleiste in Längserstreckung der wenigstens einen Profilleiste ausgebildet.

Vorteilhaft folgt der wenigstens eine Bremsnippel der Drehung der wenigstens einen Bremseinheit um die axiale Drehachse der wenigstens einen Profilleiste. Damit kann eine möglichst einfache Bedienung bei der Drehung der wenigstens einen Bremseinheit um die axiale Drehachse der wenigstens einen Profilleiste ermöglicht werden.

Vorteilhaft ist der wenigstens eine Bremsnippel als Ring mit Bremsnippel ausgebildet. Damit ist eine leichte Montage des wenigstens einen Ring mit Bremsnippel an die wenigstens eine Haltemanschette möglich, die eine bedienerfreundliche Drehung begünstigt.

Vorteilhaft ist für die steckbare Radanordnung vorgesehen, dass zwischen dem äußeren Ende der wenigstens einen Seele, wo sie an der wenigstens einen Bremseinheit befestigt ist, und der wenigstens einen Bremsbacke zusätzlich um die wenigstens eine Seele herum wenigstens eine Spiralfeder angeordnet ist, welche eine rücktreibende Federkraft auf die wenigstens eine Bremsbacke bewirkt, sodass nach einer Zugkraftbeaufschlagung über die wenigstens eine Bremsleitung, durch welche die wenigstens eine Bremsbacke auf das wenigstens eine Rad gedrückt wird, diese wieder vom wenigstens einen Rad weg in ihre ursprüngliche Ausgangsposition verbracht wird. Dadurch wird ein sicheres Lösen der Bremse nach einem Bremsvorgang gewährleistet.

Vorteilhaft weist die wenigstens eine Profilleiste wenigstens eine Halteeinheit auf, welche die wenigstens eine Seele mit der wenigstens einen Profilleiste, insbesondere dem Ring mit Bremsnippel, verbindet. Dabei kann die wenigstens eine Halteeinheit auf die wenigstens eine Profilleiste aufgeschoben oder aufgeklipst oder formschlüssig befestigt oder geschraubt oder geklebt oder gesteckt werden. Damit kann sichergestellt werden, dass die wenigstens eine Seele nicht beispielsweise an Hindernissen hängen bleibt und somit ein Schaden am Rollator entstehen kann.

Weitere Vorteile, Merkmale und Ausgestaltungsmöglichkeiten ergeben sich aus der nachfolgenden Figurenbeschreibung von nicht einschränkend zu verstehenden Ausführungsbeispielen.

### Kurzbeschreibung der Zeichnungen

In den Zeichnungen zeigt:
- Fig. 1: eine perspektivische Ansicht eines Rollators mit erfindungsgemäßen steckbaren Radanordnungen;
- Fig. 2: eine perspektivische Ansicht der steckbaren Radanordnung;
- Fig. 3: eine weitere perspektivische Ansicht der steckbaren Radanordnung;
- Fig. 4: eine Frontansicht der steckbaren Radanordnung;
- Fig. 5: eine weitere perspektivische Ansicht der steckbaren Radanordnung;
- Fig. 6: eine weitere Frontansicht der steckbaren Radanordnung;
- Fig. 7: eine weitere perspektivische Ansicht der steckbaren Radanordnung;
- Fig. 8: eine weitere perspektivische Ansicht der steckbaren Radanordnung;
- Fig. 9: eine perspektivische Ansicht der steckbaren Radanordnung mit Fokus auf die Arretierung;
- Fig. 10: eine weitere perspektivische Ansicht der steckbaren Radanordnung;
- Fig. 11: eine weitere perspektivische Ansicht der steckbaren Radanordnung;
- Fig. 12: eine weitere perspektivische Ansicht der steckbaren Radanordnung;
- Fig. 13: eine perspektivische Ansicht der steckbaren Radanordnung mit Fokus auf die Arretierung;
- Fig. 14: eine weitere perspektivische Ansicht der steckbaren Radanordnung mit Fokus auf die Arretierung;
- Fig. 15: eine weitere perspektivische Ansicht der steckbaren Radanordnung mit Fokus auf die Arretierung;
- Fig. 16: eine weitere perspektivische Ansicht der steckbaren Radanordnung mit Fokus auf die Arretierung;
- Fig. 17: eine perspektivische Ansicht der Arretierung;
- Fig. 18: eine weitere perspektivische Ansicht der Arretierung;
- Fig. 19: eine Seitenansicht der steckbaren Radanordnung mit Fokus auf die Arretierung;
- Fig. 20: eine weitere Seitenansicht der steckbaren Radanordnung in mit Fokus auf die Arretierung;
- Fig. 21: eine weitere Seitenansicht der steckbaren Radanordnung in mit Fokus auf die Arretierung;
- Fig. 22: eine perspektivische Ansicht von zwei steckbaren Radanordnungen in Innenposition;
- Fig. 23: eine weitere perspektivische Ansicht von zwei steckbaren Radanordnungen in Außenposition;

In den Zeichnungen mit gleichen Bezugszeichen versehene Elemente entsprechen im Wesentlichen einander, sofern nichts anderes angegeben ist. Darüber hinaus wird darauf verzichtet, Bestandteile zu zeigen und zu beschreiben, welche nicht wesentlich zum Verständnis der hierin offenbarten technischen Lehre sind. Im Weiteren werden nicht für alle bereits eingeführten und dargestellten Elemente die Bezugszeichen wiederholt, sofern die Elemente selbst und deren Funktion bereits beschrieben wurden oder für einen Fachmann bekannt sind.

### Ausführliche Beschreibung von Ausführungsbeispielen

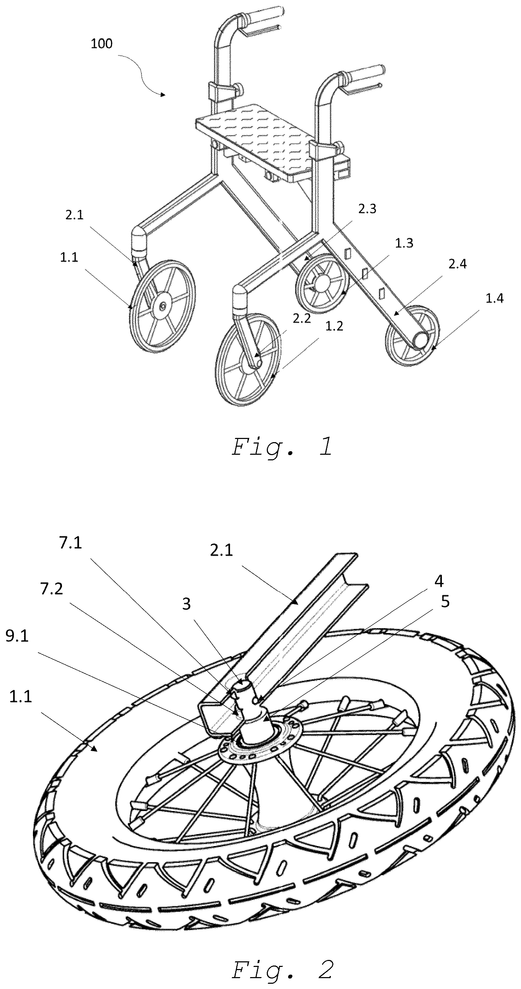

Fig. 1 zeigt eine perspektivische Ansicht eines Rollators 100 mit erfindungsgemäßen steckbaren Radanordnungen nach Patentanspruch 1. Dabei ist erkennbar, dass der Rollator 100 vier Profilleisten 2.1, 2.2, 2.3 und 2.4) und vier Räder 1.1, 1.2, 1.3 und 1.4) aufweist. In der gezeigten vorteilhaften Ausführung sind die Hinterräder 1.3 und 1.4 in Form einer erfindungsgemäßen steckbaren Radanordnung ausgebildet.

Fig. 2 zeigt eine perspektivische Ansicht der steckbaren Radanordnung in einer vorteilhaften Ausführung der Erfindung. Dabei befindet sich die am Ende der Radseite der Steckachse 3 befindliche Löseeinheit (hier nicht dargestellt) in einer Sperrposition. Die Radanordnung weist eine Profilleiste 2.1 auf, die hier als rechteckiges Profilrohr im Schnitt gezeigt wird. Damit kann der Innenbereich der dargestellten Profilleiste 2.1 erkannt werden.

Es ist weiterhin gezeigt, dass die Steckachse 3 durch die Durchgangsöffnung (hier nicht dargestellt), die in dieser vorteilhaften Ausführungsform der Erfindung an einem äußeren Ende der Profilleiste 2.1 ausgebildet ist, durchsteckbar ist und das Rad 1.1 an der Profilleiste 2.1 befestigt.

Zudem werden die Wölbung 7.1 und 7.2 jeweils als Senkung in die Profilleiste 2.1 dargestellt und sind konzentrisch auf beiden Seiten der Profilleiste 2.1 zur Durchgangsöffnung (hier nicht dargestellt) ausgebildet. In der gezeigten vorteilhaften Ausführung der Erfindung ragen die Wölbung 7.1 und 7.2 in das Innere der Profilleiste 2.1 hinein.

Zudem weisen die Wölbung 7.1 und 7.2 eine Durchgangsöffnung (hier nicht markiert) auf, durch die in dieser vorteilhaften Ausführungsform der Erfindung die Steckachse 3 durchgesteckt ist. Die Steckachse 3 ragt in dieser beispielhaften Ausführung nicht über die Wölbung 7.1 hinaus, sondern ist in dieser versteckt ausgebildet.

Weiterhin ist eine zusätzliche Senkung je Wölbung 7.1 oder 7.2, die beispielsweise mit einem Senkbohrer angebracht wird und einen größeren Durchmesser als die Durchgangsöffnung (hier nicht markiert) aufweist, gezeigt. Dabei ist die Senkung konzentrisch zu der Durchgangsöffnung (hier nicht markiert) angeordnet.

Die Wölbungen 7.1 und 7.2 bilden zusammen mit der Arretiereinheit 4 eine Arretierung aus bzw. sind als Arretiermodul ausgebildet.

Am äußeren Ende der Steckachse 3 auf der dem Rad 1.1 abgewandten Seite der Steckachse 3 ist die Arretiereinheit 4 gezeigt, die beispielhaft als Federknopf oder Druckknopf ausgebildet ist.

An der Wölbung 7.2, die auf der Rad 1.1 zugewandten Seite der Profilleiste 2.1 angeordnet ist, ist die Distanzhülse bzw. Distanzbuchse 5 anschließend platziert. Diese beabstandet das Rad 1.1 von der Profilleiste 2.1 und/oder der Wölbung 7.2, sodass ein freier Lauf des Rads 1.1 ermöglicht wird.

Das Rad 1.1 ist in dieser vorteilhaften Ausgestaltung der Erfindung über ein erstes Lager 9.1 und ein zweites Lager (hier nicht dargestellt) mit der Steckachse 3 verbunden. Dabei ist der Innendurchmesser des ersten Lager 9.1 und des zweiten Lagers (hier nicht dargestellt) nahezu gleich dem Außendurchmesser der Steckachse 3. Es ist entsprechend eine Passung ausgebildet, die entweder als Spielpassung oder als Presspassung ausgebildet ist. Ob eine Spiel- oder eine Presspassung vorliegt, ist von dem Verhältnis des jeweiligen Innendurchmessers des ersten Lagers 9.1 oder des zweiten Lagers (hier nicht dargestellt) und dem Außendurchmesser der Steckachse 3 abhängig, wobei die genaueren Zusammenhänge einem Fachmann bekannt sind und diese hier aus diesem Grund nicht genauer ausgeführt werden.

Mit Hilfe einer Sechskantmutter (hier nicht gezeigt) wird das Rad 1.1 auf der Steckachse 3 zwischen der Distanzbuchse 5 und der Sechskantmutter (hier nicht gezeigt) an den Auflageflächen des ersten Lagers 9.1 und des zweiten Lagers (hier nicht dargestellt) unter Berücksichtigung des Längsspiels des Rads 1.1 gegenüber der Distanzbuchse 5 und/oder der Wölbung 7.2 und/oder der Profilleiste 2.1 montiert.

Um eine gute Befestigung zu gewährleisten, ist am äußeren Ende der Steckachse 3 der Rad 1.1 zugewandten Seite der Steckachse 3 ein Außengewinde (hier nicht dargestellt) ausgebildet, das einen zu dem Innengewinde der Sechskantmutter (hier nicht dargestellt) passenden Durchmesser aufweist. Mit Hilfe der Sechskantmutter (hier nicht dargestellt) und dem Außengewinde (hier nicht dargestellt) ist es möglich das Längsspiel des Rads 1.1 auf der Steckachse 3 gegenüber der Distanzbuchse 5 und/oder der Wölbung 7.2 und/oder der Profilleiste 2.1 einzustellen.

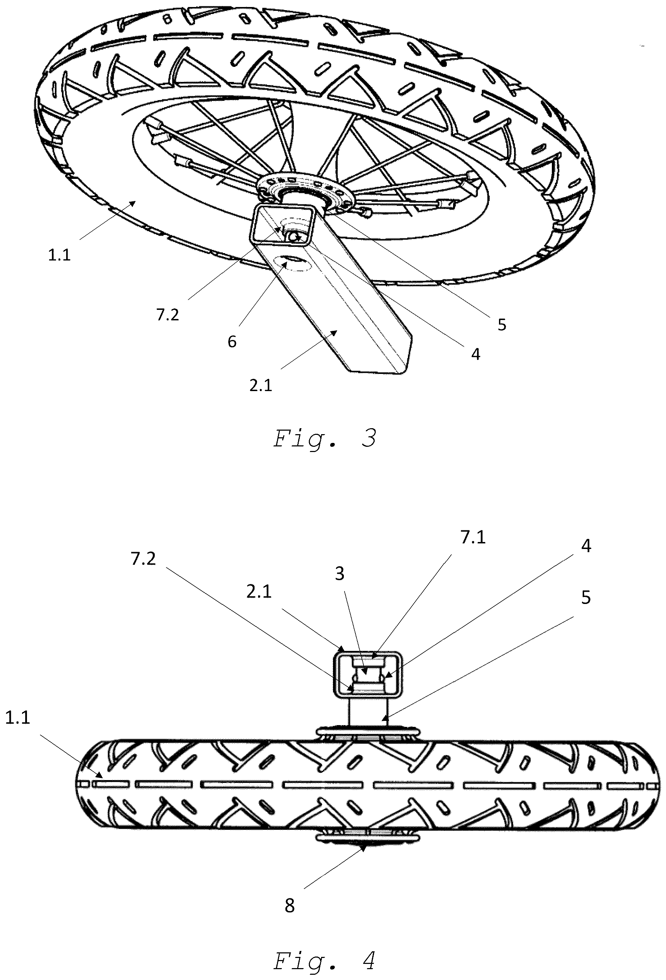

Fig. 3 zeigt eine perspektivische Ansicht der steckbaren Radanordnung in einer vorteilhaften Ausführung der Erfindung. Dabei sind das Rad 1.1, eine Distanzhülse oder Distanzbuchse 5 sowie die Arretiereinheit 4, die in diesem Fall als Druckknopf oder Federknopf ausgebildet ist und an der Steckachse 3 angeordnet ist, analog zu Fig. 2 erkennbar. Weiterhin ist die Profilleiste 2.1 als rechteckiges Profilrohr dargestellt. Zudem wird die Wölbung 7.2 hineinragend in die Profilleiste 2.1 dargestellt. Die Wölbung 7.2 bildet zusammen mit einer weiteren Wölbung (hier nicht dargestellt) und der Arretiereinheit 4 eine Arretierung aus, sodass die Steckachse 3 an der Profilleiste 2.1 befestigt ist. Die gezeigte Distanzhülse 5 beabstandet die Profilleiste 2.1 und/oder die Wölbung 7.2 von dem Rad 1.1.

Fig. 4 zeigt eine Frontansicht der steckbaren Radanordnung in einer vorteilhaften Ausführung der Erfindung. Dabei sind - wie bereits in Fig. 2 erörtert - die Steckachse 3 auf der die Arretiereinheit 4 angeordnet ist, das Rad 1.1, die Distanzhülse bzw. Distanzbuchse 5 sowie die in die Profilleiste 2.1, die als rechteckiges Profilrohr dargestellt ist, hineinragenden Wölbungen 7.1 und 7.2 zu erkennen. Analog zu Fig. 2 bilden die Wölbungen 7.1 und 7.2 zusammen mit der Arretiereinheit 4, die hier beispielhaft als Federknopf oder Druckknopf ausgebildet ist, eine Arretierung der Steckachse 3, damit diese an der Profilleiste 2.1 befestigbar ist. Zudem ist die Löseeinheit 8 erkennbar, die beispielhaft als Federknopf oder Druckknopf ausgebildet ist.

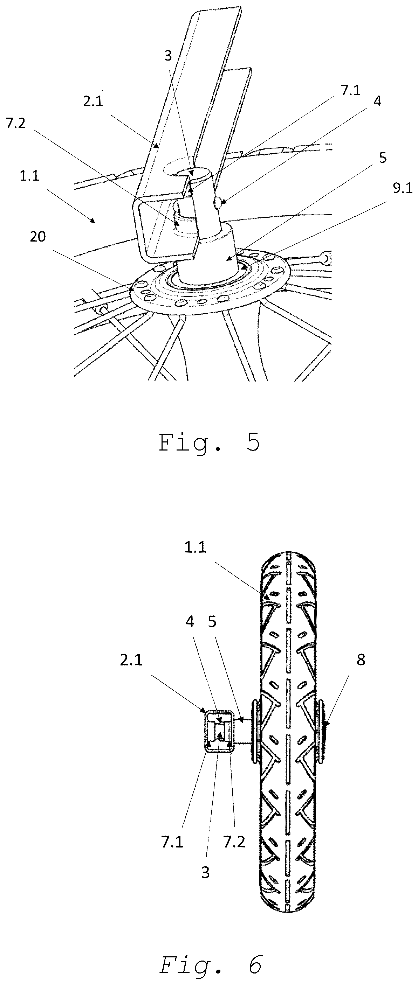

Fig. 5 zeigt eine perspektivische Ansicht der steckbaren Radanordnung in einer vorteilhaften Ausführung der Erfindung. Dabei sind analog zu Fig. 2 die Steckachse 3 sowie die an dieser angeordnete Arretiereinheit 4 und die Distanzhülse bzw. Distanzbuchse 5 erkennbar. Die Profilleiste 2.1 ist als rechteckiges Profilrohr im Schnitt dargestellt, um die Wölbungen 7.1 und 7.2, die konzentrisch zur Durchgangsöffnung (hier nicht dargestellt) angeordnet sind und in die Profilleiste 2.1 hineinragen, besser erkennen zu können. Die Radnabe 20 und das Rad 1.1 sind in dieser Figur nur teilweise dargestellt.

Fig. 6 zeigt eine weitere Frontansicht der steckbaren Radanordnung in einer vorteilhaften Ausführung der Erfindung. Dabei ist analog zu Fig. 4 die Arretiereinheit 4, die auf der Steckachse 3 angeordnet ist und mit den Wölbungen 7.1 und 7.2 eine Arretierung ausbildet, beispielhaft als Federknopf oder Druckknopf dargestellt. Diese Arretierung ermöglicht es die Steckachse 3 an der Profilleiste 2.1, die als rechteckiges Profilrohr ausgebildet ist, zu befestigen. Die Distanzhülse bzw. Distanzbuchse beabstandet die Profilleiste 2.1 und/oder die Wölbung 7.2, die bereits an der Oberfläche der Profilleiste 2.1 beginnt, von dem Rad 1.1. Weiterhin ist die Löseeinheit 8 beispielhaft in Form eines Federknopfes oder Druckknopfes dargestellt.

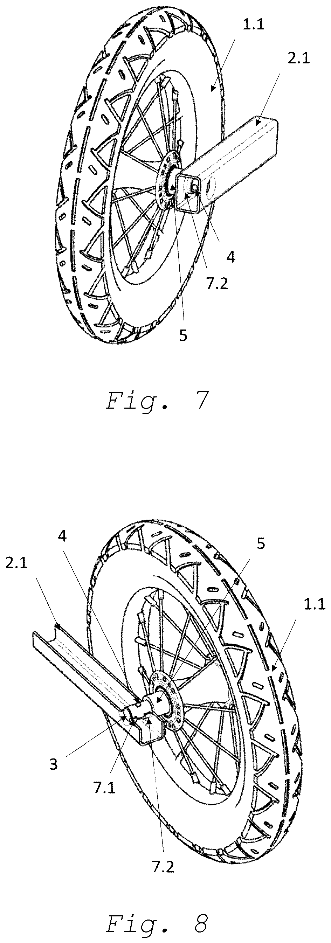

Fig. 7 zeigt eine perspektivische Ansicht der steckbaren Radanordnung in einer vorteilhaften Ausführung der Erfindung.

Dabei ist analog zu Fig. 3 die Arretiereinheit 4, die an der Steckachse angeordnet ist und mit der Wölbung 7.2 und einer weiteren Wölbung (hier nicht dargestellt) eine Arretierung ausbildet und die Steckachse (hier nicht dargestellt) an der Profilleiste 2.1 befestigt, beispielhaft als Federknopf oder Druckknopf dargestellt. Die Profilleiste 2.1 ist als rechteckiges Profilrohr dargestellt, in das die Wölbung 7.2 und eine weitere Wölbung (hier nicht dargestellt) hineinragen. Analog zu Fig. 2 beabstandet die Distanzhülse bzw. Distanzbuchse 5 das Rad 1.1 von der Profilleiste 2.1 und/oder der Wölbung 7.2, die an der Oberfläche der Profilleiste 2.1 beginnt.

Fig. 8 zeigt eine perspektivische Ansicht der steckbaren Radanordnung in einer vorteilhaften Ausführung der Erfindung. Dabei ist analog zu Fig. 2 die Arretiereinheit 4, die auf der Steckachse 3 angeordnet ist und mit den Wölbungen 7.1 und 7.2 eine Arretierung ausbildet und so die Steckachse 3 an der Profilleiste 2.1 befestigt, beispielhaft als Federknopf bzw. Druckknopf dargestellt. Hier ragen die Wölbungen 7.1 und 7.2 von der Oberfläche der Profilleiste 2.1 in diese hinein. Die Profilleiste 2.1 ist als rechteckiges Profilrohr im Schnitt dargestellt, um den Innenraum der Profilleiste 2.1 besser erkennbar zu gestalten. Das auf der Radnabe (hier nicht dargestellte) montierte Rad 1.1 wird durch die Distanzhülse bzw. Distanzbuchse 5 von der Profilleiste 2.1 und/oder der Wölbung 7.2 beabstandet.

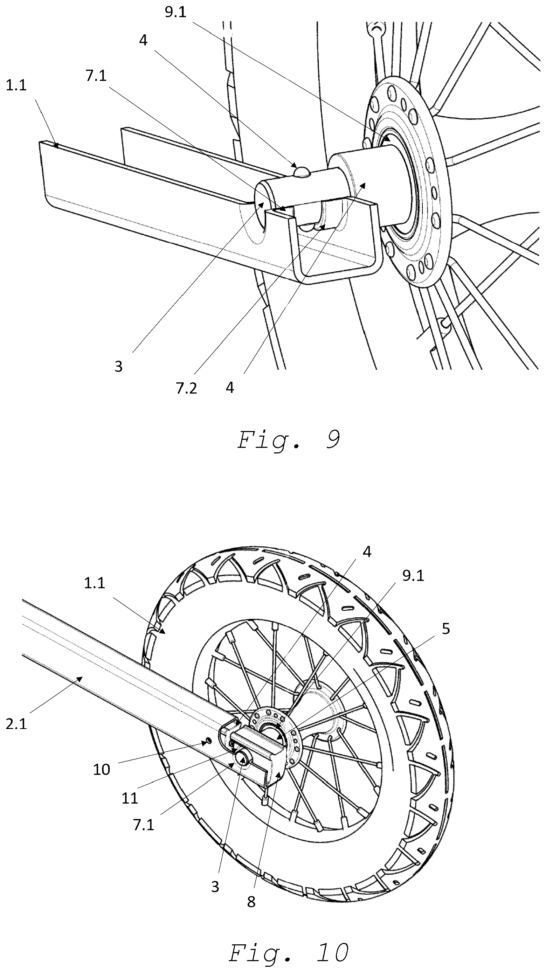

Fig. 9 zeigt eine perspektivische Ansicht der steckbaren Radanordnung in einer vorteilhaften Ausführung der Erfindung. Dabei ist analog zu Fig. 2 die Arretiereinheit 4, die auf der Steckachse 3 angeordnet ist und mit den Wölbungen 7.1 und 7.2 eine Arretierung ausbildet und so die Steckachse 3 an der Profilleiste 2.1 befestigt, beispielhaft als Federknopf bzw. Druckknopf dargestellt. Hier ragen die Wölbungen 7.1 und 7.2 von der Oberfläche der Profilleiste 2.1 in diese hinein. Die Profilleiste 2.1 ist als rechteckiges Profilrohr im Schnitt dargestellt, um den Innenraum der Profilleiste 2.1 besser erkennbar zu gestalten. Das auf der Radnabe (hier nicht dargestellte) montierte Rad (hier nicht dargestellt) wird durch die Distanzhülse bzw. Distanzbuchse 5 von der Profilleiste 2.1 und/oder der Wölbung 7.2 beabstandet.

Fig. 10 zeigt eine perspektivische Ansicht der steckbaren Radanordnung in einer vorteilhaften Ausführung der Erfindung. Dabei befindet sich die in Verbindung zur Arretiereinheit 4 befindliche Löseeinheit 8 in einer Freigabeposition. Die Radanordnung weist eine Profilleiste 2.1 auf, die hier als rechteckiges Profilrohr mit teilweisen Halbschnitt gezeigt wird. Damit kann der Einschiebebereich der Arretiereinheit 4 und/oder der Löseeinheit 8 im Innenbereich der dargestellten Profilleiste 2.1 erkannt werden.

Es ist weiterhin gezeigt, dass die Steckachse 3 durch die Durchgangsöffnung (hier nicht dargestellt), die in dieser vorteilhaften Ausführungsform der Erfindung an einem äußeren Ende der Profilleiste 2.1 ausgebildet ist, durchsteckbar ist und das Rad 1.1 an der Profilleiste 2.1 befestigt.

Zudem werden die Wölbung 7.1 und eine weitere Wölbung (hier nicht dargestellt) jeweils als Senkung in die Profilleiste 2.1 dargestellt und sind konzentrisch auf beiden Seiten der Profilleiste 2.1 zur Durchgangsöffnung (hier nicht dargestellt) ausgebildet. In der gezeigten vorteilhaften Ausführung der Erfindung ragen die Wölbung 7.1 und die weitere Wölbung (hier nicht dargestellt) nicht in das Innere der Profilleiste 2.1 hinein.

Zudem weisen die Wölbung 7.1 und 7.2 eine Durchgangsöffnung (hier nicht dargestellt) auf, durch die in dieser vorteilhaften Ausführungsform der Erfindung die Steckachse 3 durchgesteckt ist. Die Steckachse 3 ragt in dieser beispielhaften Ausführung nicht über die Wölbung 7.1 hinaus, sondern ist in dieser bzw. in der Profilleiste 2.1 versteckt ausgebildet.

An der weiteren Wölbung (hier nicht dargestellt), die auf der Rad 1.1 zugewandten Seite der Profilleiste 2.1 angeordnet ist, ist die Distanzbuchse 5 anschließend platziert. Diese beabstandet das Rad 1.1 von der Profilleiste 2.1 und/oder der weiteren Wölbung (hier nicht dargestellt), sodass ein freier Lauf des Rads 1.1 ermöglicht wird.

Weiterhin ist die Doppelbohrung 11 in der Löseeinheit 8 ausgebildet. Unter einer Doppelbohrung 11 ist die Kombination aus einer kleineren Durchgangsbohrung mit kleinerem Bohrungsdurchmesser, die auf der Arretiereinheit 4 zugewandten Seite der Doppelbohrung 11 angeordnet ist, und einer weiteren Durchgangsbohrung, deren Bohrungsdurchmesser nahezu dem Außendurchmesser der Steckachse 3 entspricht, zu verstehen. Der kleinere Bohrungsdurchmesser entspricht dabei nahezu dem Außendurchmesser der Ringnut (hier nicht dargestellt) auf der Steckachse 3, wobei die Ringnut (hier nicht dargestellt) auf der dem Rad 1.1 abgewandten Seite der Steckachse 3 angeordnet ist und der Außendurchmesser der Ringnut (hier nicht dargestellt) kleiner ausgebildet ist als der Außendurchmesser der Steckachse 3. Es ist entsprechend eine Passung ausgebildet, die entweder als Spielpassung oder als Presspassung ausgebildet ist. Ob eine Spiel- oder eine Presspassung vorliegt, ist von dem Verhältnis des jeweiligen Bohrungsdurchmessers der Doppelbohrung und des Außendurchmessers der Ringnut (hier nicht dargestellt) oder dem Außendurchmesser der Steckachse 3 abhängig, wobei die genaueren Zusammenhänge einem Fachmann bekannt sind und diese hier aus diesem Grund nicht genauer ausgeführt werden.

Die Arretiereinheit 4 weist analog zu der Profilleiste 2.1 eine weitere Durchgangsöffnung 10 auf, mit Hilfe derer ein Haltestift (hier nicht dargestellt), der durch die weitere Durchgangsöffnung 10 durchsteckbar ist, die Arretiereinheit 4 in der Profilleiste 2.1 montiert. Es liegt eine Passung vor, die entweder als Spielpassung oder als Presspassung ausgebildet ist. Ob eine Spiel- oder eine Presspassung vorliegt, ist von dem Verhältnis des Durchmessers der weiteren Durchgangsöffnung 10 und des Außendurchmessers des Haltestifts (hier nicht dargestellt) abhängig, wobei die genaueren Zusammenhänge einem Fachmann bekannt sind und diese hier aus diesem Grund nicht genauer ausgeführt werden.

Die Arretiereinheit 4 und die Löseeinheit 8 sind über ein Verbindungselement (hier nicht dargestellt), das beispielhaft als Spiralfeder oder Schraubenfeder ausgebildet ist, miteinander verbunden. Damit kann durch das Aufbringen einer Kraft auf die Löseeinheit 8, das Verbindungselement (hier nicht dargestellt) komprimiert werden und die Löseeinheit 8 somit in eine Freigabeposition überführt werden, in der die Steckachse 3 durch die Durchgangsöffnung (hier nicht dargestellt) und die Doppelbohrung 11 durchgesteckt werden kann. Wird die Kraft auf die Löseeinheit 8 weggenommen, so kehrt die Löseeinheit 8 durch die federnde Wirkung des Verbindungselements (hier nicht dargestellt) in eine Sperrposition zurück. Damit kann die Steckachse 3 nicht von der Profilleiste 2.1 getrennt werden, da die kleinere Bohrung und die Mantelfläche der Ringnut (hier nicht dargestellt) in Wirkkontakt stehen und somit eine Bewegung der Steckachse 3 in ihrer Längserstreckung verhindert wird.

Das Rad 1.1 ist in dieser vorteilhaften Ausgestaltung der Erfindung über ein erstes Lager 9.1 und ein zweites Lager (hier nicht dargestellt) mit der Steckachse 3 verbunden. Dabei ist der Innendurchmesser des ersten Lager 9.1 und des zweiten Lagers (hier nicht dargestellt) nahezu gleich dem Außendurchmesser der Steckachse 3. Es ist entsprechend eine Passung ausgebildet, die entweder als Spielpassung oder als Presspassung ausgebildet ist. Ob eine Spiel- oder eine Presspassung vorliegt, ist von dem Verhältnis des jeweiligen Innendurchmessers des ersten Lagers 9.1 oder des zweiten Lagers (hier nicht dargestellt) und dem Außendurchmesser der Steckachse 3 abhängig, wobei die genaueren Zusammenhänge einem Fachmann bekannt sind und diese hier aus diesem Grund nicht genauer ausgeführt werden.

Mit Hilfe einer Sechskantmutter (hier nicht gezeigt) wird das Rad 1.1 auf der Steckachse 3 zwischen der Distanzbuchse 5 und der Sechskantmutter (hier nicht gezeigt) an den Auflageflächen des ersten Lagers 9.1 und des zweiten Lagers (hier nicht dargestellt) unter Berücksichtigung des Längsspiels des Rads 1.1 gegenüber der Distanzbuchse 5 und/oder der Wölbung 7.2 und/oder der Profilleiste 2.1 montiert.

Um eine gute Befestigung zu gewährleisten, ist am äußeren Ende der Steckachse 3 der Rad 1.1 zugewandten Seite der Steckachse 3 ein Außengewinde (hier nicht dargestellt) ausgebildet, das einen zu dem Innengewinde der Sechskantmutter (hier nicht dargestellt) passenden Durchmesser aufweist. Mit Hilfe der Sechskantmutter (hier nicht dargestellt) und dem Außengewinde (hier nicht dargestellt) ist es möglich das Längsspiel des Rads 1.1 auf der Steckachse 3 gegenüber der Distanzbuchse 5 und/oder der Wölbung 7.2 und/oder der Profilleiste 2.1 einzustellen.

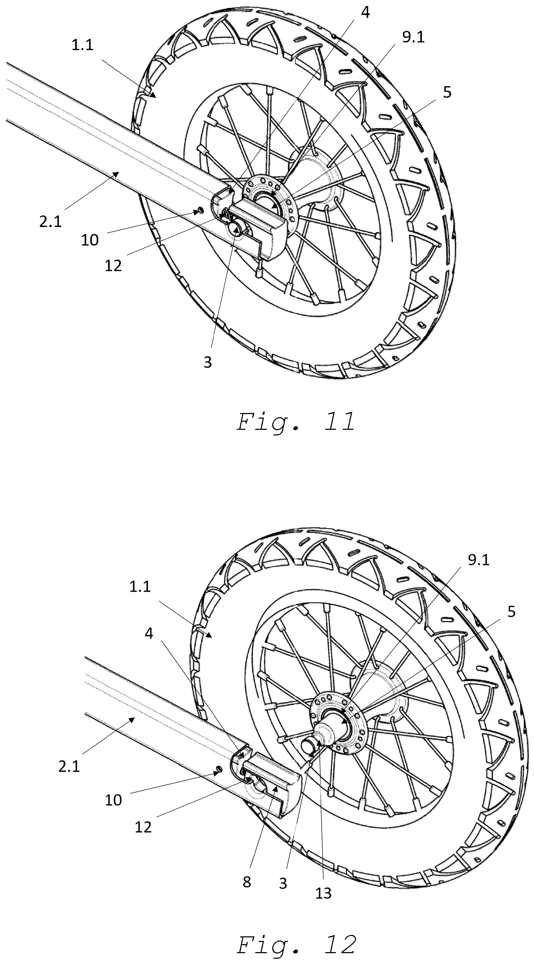

Fig. 11 zeigt eine perspektivische Ansicht der steckbaren Radanordnung in einer vorteilhaften Ausführung der Erfindung. Dabei befindet sich die in Verbindung zur Arretiereinheit 4 befindliche Löseeinheit 8 in einer Sperrposition. Des Weiteren ist das Verbindungselement 12 beispielhaft als Spiralfeder oder Schraubenfeder ausgebildet und zwischen der Arretiereinheit 4 und der Löseeinheit 8 angeordnet. Analog zu Fig. 10 sind das Lager 9.1, das auf der Steckachse 3 angeordnet ist, die Profilleiste 2.1, die als rechteckiges Profilrohr ausgebildet ist, die weitere Durchgangsöffnung 10, durch die ein Haltestift (hier nicht dargestellt) durchsteckbar ist, um die Arretiereinheit 4 in der Profilleiste 2.1 zu montieren, dargestellt. Das Rad 1.1 das durch die Distanzhülse oder Distanzbuchse 5 von der Profilleiste 2.1 beabstandet wird ist, ebenfalls erkennbar.

Fig. 12 zeigt eine perspektivische Ansicht der steckbaren Radanordnung in einer vorteilhaften Ausführung der Erfindung. Dabei befindet sich die in Verbindung zur Arretiereinheit 4 befindliche Löseeinheit 8 analog zu Fig. 10 in einer Freigabeposition. Es sind die Profilleiste 2.1, die beispielhaft als rechteckiges Profilrohr mit Halbschnitt im Bereich der Arretiereinheit 4 und der Löseeinheit 8 dargestellt ist, das Lager 9.1, das auf der Steckachse 3 angeordnet ist und die weitere Durchgangsöffnung 10, durch die ein Haltestift (hier nicht dargestellt) durchsteckbar ist, um die Arretiereinheit 4 in der Profilleiste 2.1 zu montieren, dargestellt. Weiterhin sind das Rad 1.1, die auf der Steckachse 3 montierte Distanzhülse bzw. Distanzbuchse 5 sowie die Ringnut 13, deren Außendurchmesser kleiner als der Außendurchmesser der Steckachse 3 ausgebildet ist, erkennbar. Die steckbare Radanordnung befindet sich in der dargestellten Figur inmitten eines Umsteckvorgangs von einer ersten Steckposition in eine zweite Steckposition, wobei die steckbare Radanordnung noch nicht in die zweite Steckposition überführt worden ist.

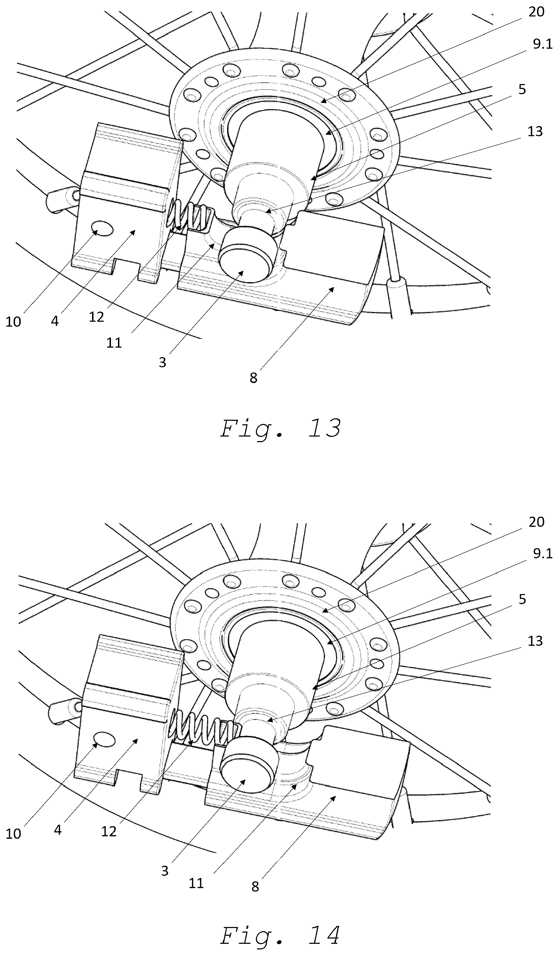

Fig. 13 zeigt eine perspektivische Ansicht der steckbaren Radanordnung in einer vorteilhaften Ausführung der Erfindung mit Fokus auf die Arretierung. Dabei ist die Profilleiste nicht dargestellt, sondern die Darstellung auf die Arretiereinheit 4, das Verbindungselement 12, das beispielhaft als Spiralfeder oder Schraubenfeder ausgebildet ist, die Löseeinheit 8 mit der Doppelbohrung 11, die beide hier im Schnitt dargestellt werden, die Steckachse 3 aufweisend die Ringnut 13, die Distanzhülse bzw. Distanzbuchse 5, das Lager 9.1 sowie die Radnabe 20 beschränkt. Die in Verbindung zu Arretiereinheit 4 befindliche Löseeinheit 8 befindet sich hier in Freigabeposition. Es ist auch gut zu erkennen, dass das Verbindungselement 12 gestaucht wird. Zudem ist die weitere Durchgangsöffnung 10 in der Arretiereinheit 4 dargestellt, die sich auf der dem Verbindungselement 12 abgewandten Seite der Arretiereinheit 4 befindet und durch die ein Haltestift (nicht dargestellt) durchsteckbar ist, um die Arretiereinheit 4 in der Profilleiste 2.1 zu montieren.

Fig. 14 zeigt eine perspektivische Ansicht der steckbaren Radanordnung in einer vorteilhaften Ausführung der Erfindung mit Fokus auf die Arretierung. Dabei ist die Profilleiste nicht dargestellt, sondern die Darstellung auf die Arretiereinheit 4, das Verbindungselement 12, das beispielhaft als Spiralfeder oder Schraubenfeder ausgebildet ist, die Löseeinheit 8 mit der Doppelbohrung 11, die beide hier im Schnitt dargestellt werden, die Steckachse 3 aufweisend die Ringnut 13, die Distanzhülse bzw. Distanzbuchse 5, das Lager 9.1 sowie die Radnabe 20 beschränkt. Die in Verbindung zu Arretiereinheit 4 befindliche Löseeinheit 8 befindet sich hier in Sperrposition. Es ist auch gut zu erkennen, dass das Verbindungselement 12 entspannt wird und die kleinere Durchgangsbohrung der Doppelbohrung 11 in Wirkkontakt mit der Mantelfläche der Ringnut 13 steht. Zudem ist die weitere Durchgangsöffnung 10 in der Arretiereinheit 4 dargestellt, die sich auf der dem Verbindungselement 12 abgewandten Seite der Arretiereinheit 4 befindet und durch die ein Haltestift (nicht dargestellt) durchsteckbar ist, um die Arretiereinheit 4 in der Profilleiste 2.1 zu montieren.

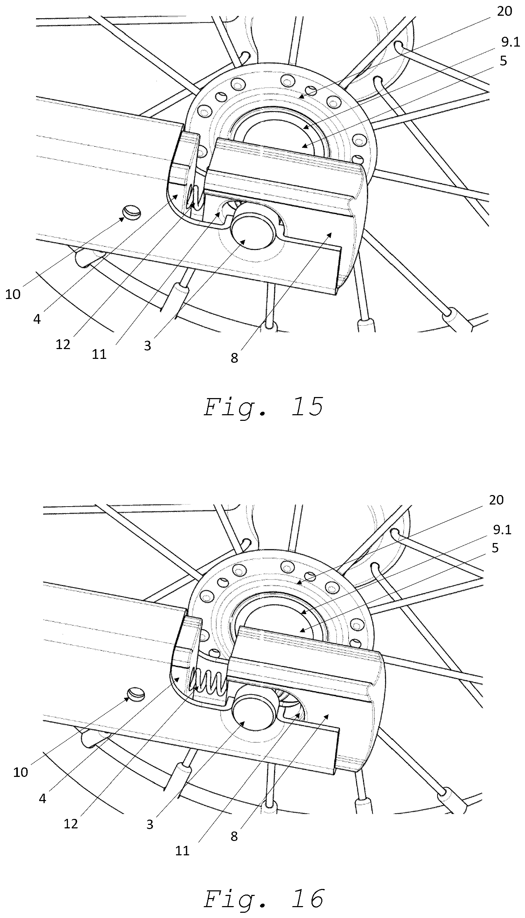

Fig. 15 zeigt eine perspektivische Ansicht der steckbaren Radanordnung in einer vorteilhaften Ausführung der Erfindung mit Fokus auf die Arretierung. Dabei ist die Darstellung auf die Profilleiste 2.1, die beispielhaft als rechteckiges Profilrohr mit Halbschnitt im Bereich der Arretiereinheit 4 und der Löseeinheit 8 dargestellt wird, die Arretiereinheit 4, das Verbindungselement 12, das beispielhaft als Spiralfeder oder Schraubenfeder ausgebildet ist, die Löseeinheit 8 mit der Doppelbohrung 11, die Steckachse 3, die Distanzhülse bzw. Distanzbuchse 5, das Lager 9.1 sowie die Radnabe 20 beschränkt. Die in Verbindung zu Arretiereinheit 4 befindliche Löseeinheit 8 befindet sich hier in Freigabeposition. Es ist auch gut zu erkennen, dass das Verbindungselement 12 gestaucht wird. Zudem ist die weitere Durchgangsöffnung 10 in der Arretiereinheit 4 dargestellt, die sich auf der dem Verbindungselement 12 abgewandten Seite der Arretiereinheit 4 befindet und durch die ein Haltestift (nicht dargestellt) durchsteckbar ist, um die Arretiereinheit 4 in der Profilleiste 2.1 zu montieren. Es ist ebenfalls erkennbar, dass die Steckachse 3 nicht über die Profilleiste 2.1 seitlich heraussteht und somit in dieser bzw. der Wölbung (hier nicht dargestellt) versteckt ausgebildet ist.

Fig. 16 zeigt eine perspektivische Ansicht der steckbaren Radanordnung in einer vorteilhaften Ausführung der Erfindung mit Fokus auf die Arretierung. Dabei ist die Darstellung auf die Profilleiste 2.1, die beispielhaft als rechteckiges Profilrohr mit Halbschnitt im Bereich der Arretiereinheit 4 und der Löseeinheit 8 dargestellt wird, die Arretiereinheit 4, das Verbindungselement 12, das beispielhaft als Spiralfeder oder Schraubenfeder ausgebildet ist, die Löseeinheit 8 mit der Doppelbohrung 11, die Steckachse 3, die Distanzhülse bzw. Distanzbuchse 5, das Lager 9.1 sowie die Radnabe 20 beschränkt. Die in Verbindung zu Arretiereinheit 4 befindliche Löseeinheit 8 befindet sich hier in Sperrposition und die kleinere Durchgangsbohrung der Doppelbohrung 11 befindet sich in Wirkkontakt mit der Mantelfläche der Ringnut (hier nicht dargestellt). Es ist auch gut zu erkennen, dass das Verbindungselement 12 entspannt wird. Zudem ist die weitere Durchgangsöffnung 10 in der Arretiereinheit 4 dargestellt, die sich auf der dem Verbindungselement 12 abgewandten Seite der Arretiereinheit 4 befindet und durch die ein Haltestift (nicht dargestellt) durchsteckbar ist, um die Arretiereinheit 4 in der Profilleiste 2.1 zu montieren. Es ist ebenfalls erkennbar, dass die Steckachse 3 nicht über die Profilleiste 2.1 seitlich heraussteht und somit in dieser bzw. der Wölbung (hier nicht dargestellt) versteckt ausgebildet ist.

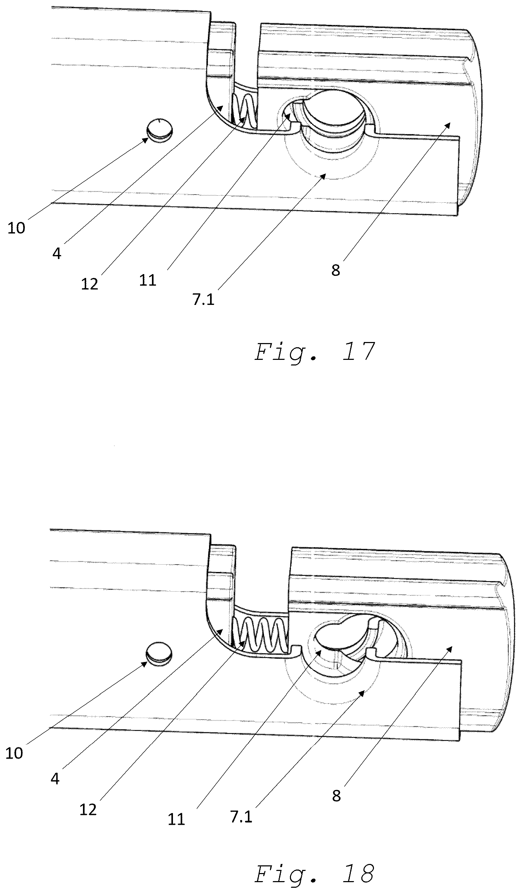

Fig. 17 zeigt eine perspektivische Ansicht der Arretierung in einer vorteilhaften Ausführung der Erfindung. Dabei ist die Darstellung auf die Profilleiste 2.1, die beispielhaft als rechteckiges Profilrohr mit Halbschnitt im Bereich der Arretiereinheit 4 und der Löseeinheit 8 dargestellt wird, die Arretiereinheit 4, das Verbindungselement 12, das beispielhaft als Spiralfeder oder Schraubenfeder ausgebildet ist und die Löseeinheit 8 mit der Doppelbohrung 11 beschränkt. Die in Verbindung zu Arretiereinheit 4 befindliche Löseeinheit 8 befindet sich hier in Freigabeposition. Es ist auch gut zu erkennen, dass das Verbindungselement 12 gestaucht wird. Zudem ist die weitere Durchgangsöffnung 10 in der Arretiereinheit 4 dargestellt, durch die ein Haltestift (nicht dargestellt) durchsteckbar ist, um die Arretiereinheit 4 in der Profilleiste 2.1 zu montieren. Es ist ebenfalls erkennbar, dass Wölbung 7.1 in der Freigabeposition konzentrisch zu der großen Bohrung der Doppelbohrung 11 ausgebildet ist.

Fig. 18 zeigt eine perspektivische Ansicht der Arretierung in einer vorteilhaften Ausführung der Erfindung. Dabei ist die Darstellung auf die Profilleiste 2.1, die beispielhaft als rechteckiges Profilrohr mit Halbschnitt im Bereich der Arretiereinheit 4 und der Löseeinheit 8 dargestellt wird, die Arretiereinheit 4, das Verbindungselement 12, das beispielhaft als Spiralfeder oder Schraubenfeder ausgebildet ist, und die Löseeinheit 8 mit der Doppelbohrung 11 beschränkt. Die in Verbindung zu Arretiereinheit 4 befindliche Löseeinheit 8 befindet sich hier in Sperrposition. Es ist auch gut zu erkennen, dass das Verbindungselement 12 entspannt wird. Zudem ist die weitere Durchgangsöffnung 10 in der Arretiereinheit 4 dargestellt, durch die ein Haltestift (nicht dargestellt) durchsteckbar ist, um die Arretiereinheit 4 in der Profilleiste 2.1 zu montieren. Es ist ebenfalls erkennbar, dass Wölbung 7.1 in der Sperrposition konzentrisch zu der kleinen Bohrung der Doppelbohrung 11 ausgebildet ist.

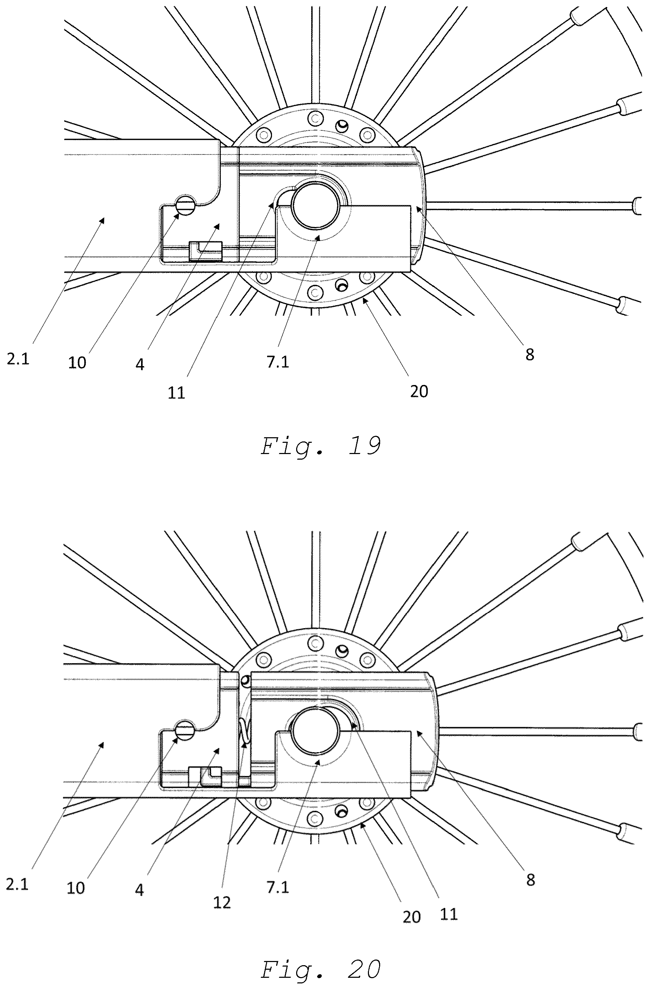

Fig. 19 zeigt eine Seitenansicht der steckbaren Radanordnung in einer vorteilhaften Ausführung der Erfindung mit Fokus auf die Arretierung. Dabei sind die Profilleiste 2.1, die beispielhaft als rechteckiges Profilrohr mit einem Teilschnitt im Bereich der Arretiereinheit 4 und der Löseeinheit 8 dargestellt wird, die Arretiereinheit 4, die Löseeinheit 8 mit der Doppelbohrung 11, die Steckachse (hier nicht markiert), die Wölbung 7.1 sowie die Radnabe 20 dargestellt. Die in Verbindung zu Arretiereinheit 4 befindliche Löseeinheit 8 befindet sich in Freigabeposition. Das Verbindungselement ist hier nicht zu erkennen. Zudem ist die weitere Durchgangsöffnung 10 in der Arretiereinheit 4 und der Profilleiste 2.1 dargestellt, die sich auf der dem Verbindungselement (nicht dargestellt) abgewandten Seite der Arretiereinheit 4 befindet und durch die ein Haltestift (nicht dargestellt) durchsteckbar ist, um die Arretiereinheit 4 in der Profilleiste 2.1 zu montieren. Es ist ebenfalls die seitlich an der Profilleiste 2.1 befindliche Wölbung (7.1) erkennbar, die in der Freigabeposition konzentrisch zu der großen Bohrung der Doppelbohrung 11 ausgebildet ist.

Fig. 20 zeigt eine weitere Seitenansicht der steckbaren Radanordnung in einer vorteilhaften Ausführung der Erfindung mit Fokus auf die Arretierung. Dabei sind die Profilleiste 2.1, die beispielhaft als rechteckiges Profilrohr mit einem Teilschnitt im Bereich der Arretiereinheit 4 und der Löseeinheit 8 dargestellt wird, die Arretiereinheit 4, die Löseeinheit 8 mit der Doppelbohrung 11, die Steckachse (hier nicht markiert), die Wölbung 7.1, die sich seitlich an der Profilleiste 2.1 befindet, das Verbindungselement 12 sowie die Radnabe 20 dargestellt. Die in Verbindung zu Arretiereinheit 4 befindliche Löseeinheit 8 befindet sich hier in einer Übergangsposition zwischen der Freigabeposition und der Sperrposition. Das Verbindungselement 12, das beispielhaft als Spiralfeder oder Schraubenfeder ausgebildet ist, ist teilweise zu erkennen, da dieses entspannt wird und somit die Wölbung (7.1) nicht länger konzentrisch zu der großen Bohrung der Doppelbohrung 11 ausgebildet ist. Zudem ist die weitere Durchgangsöffnung 10 in der Arretiereinheit 4 und der Profilleiste 2.1 dargestellt, die sich auf der dem Verbindungselement 12 abgewandten Seite der Arretiereinheit 4 befindet und durch die ein Haltestift (nicht dargestellt) durchsteckbar ist, um die Arretiereinheit 4 in der Profilleiste 2.1 zu montieren.

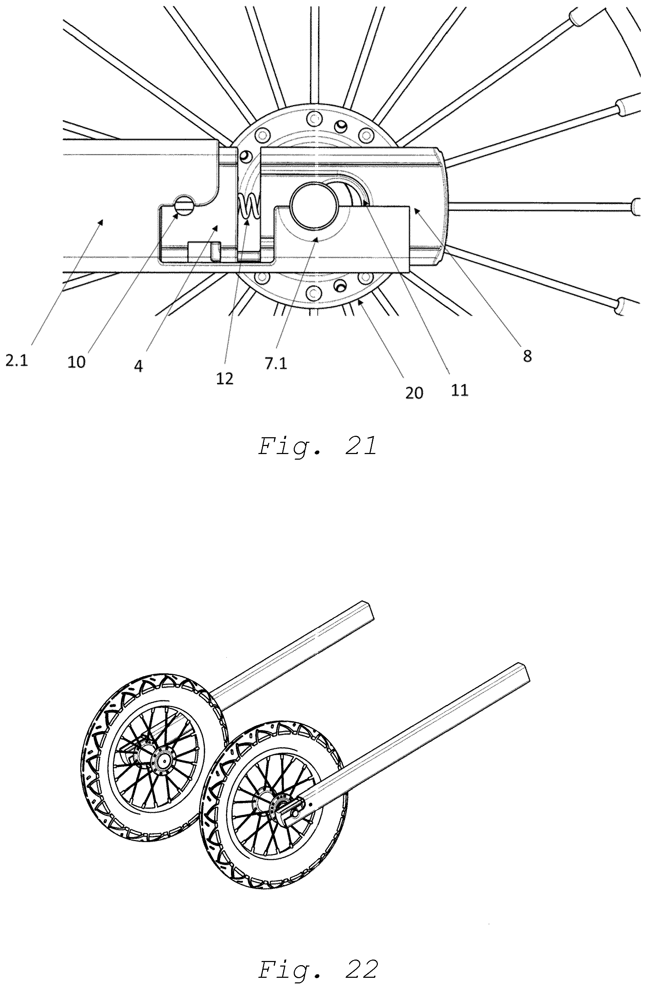

Fig. 21 zeigt eine weitere Seitenansicht der steckbaren Radanordnung in einer vorteilhaften Ausführung der Erfindung mit Fokus auf die Arretierung. Dabei sind die Profilleiste 2.1, die beispielhaft als rechteckiges Profilrohr mit einem Teilschnitt im Bereich der Arretiereinheit 4 und der Löseeinheit 8 dargestellt wird, die Arretiereinheit 4, die Löseeinheit 8 mit der Doppelbohrung 11, die Steckachse (hier nicht markiert), die Wölbung 7.1, die sich seitlich an der Profilleiste 2.1 befindet, das Verbindungselement 12 sowie die Radnabe 20 dargestellt. Die in Verbindung zu Arretiereinheit 4 befindliche Löseeinheit 8 befindet sich hier in der Sperrposition. Das Verbindungselement 12, das beispielhaft als Spiralfeder oder Schraubenfeder ausgebildet ist, ist gut zu erkennen, da dieses entspannt ist und sich dadurch die kleinere Durchgangsbohrung der Doppelbohrung 11 in Wirkkontakt mit der Mantelfläche der Ringnut (hier nicht dargestellt) befindet. Zudem ist die weitere Durchgangsöffnung 10 in der Arretiereinheit 4 und der Profilleiste 2.1 dargestellt, die sich auf der dem Verbindungselement 12 abgewandten Seite der Arretiereinheit 4 befindet und durch die ein Haltestift (nicht dargestellt) durchsteckbar ist, um die Arretiereinheit 4 in der Profilleiste 2.1 zu montieren.

Fig. 22 zeigt eine perspektivische Ansicht von zwei steckbaren Radanordnungen in Innenposition in einer vorteilhaften Ausführung der Erfindung. Dabei ist erkennbar, dass durch die Verwendung der zweiten Steckposition, auch Innenposition genannt, eine Verringerung der Spurbreite, also des Abstandes zwischen zwei nebeneinanderliegenden Rädern (hier nicht dargestellt), möglich ist. Damit kann ein verbesserter Einsatz beispielsweise eines Rollators (hier nicht dargestellt) in Innenräumen realisiert werden.

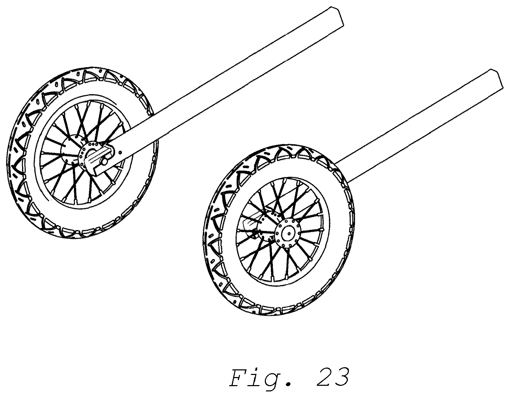

Fig. 23 zeigt eine perspektivische Ansicht von zwei steckbaren Radanordnungen in Außenposition in einer vorteilhaften Ausführung der Erfindung. Dabei ist erkennbar, dass durch die Verwendung der ersten Steckposition, auch Außenposition genannt, eine Vergrößerung der Spurbreite, also des Abstandes zwischen zwei nebeneinanderliegenden Rädern (hier nicht dargestellt), möglich ist. Damit kann eine höhere Standsicherheit beispielsweise eines Rollators (hier nicht dargestellt) bei einem Einsatz beispielsweise im Gelände oder auf der Straße realisiert werden.

Obwohl die Erfindung im Detail durch die vorteilhaften Ausführungsbeispiele näher illustriert und beschrieben wurde, so ist die Erfindung nicht durch die offenbarten Beispiele eingeschränkt.

### Bezugszeichenliste

- 1.1, 1.2, 1.3, 1.4: Rad
- 2.1, 2.2, 2.3, 2.4: Profilleiste
- 3: Steckachse
- 4: Arretiereinheit
- 5: Distanzbuchse
- 6: Durchgangsöffnung
- 7.1, 7.2: Wölbung
- 8: Löseeinheit
- 9.1, 9.2: Lager
- 10: Weitere Durchgangsöffnung
- 11: Doppelbohrung
- 12: Verbindungselement
- 13: Ringnut

- 20: Radnabe

- 100: Rollator

## Patentansprüche

1. Steckbare Radanordnung aufweisend wenigstens ein Rad (1.1; 1.2; 1.3; 1.4), wenigstens eine Profilleiste (2.1; 2.2; 2.3; 2.4), wenigstens eine Steckachse (3), wenigstens eine Arretiereinheit (4), wobei das wenigstens eine Rad (1.1; 1.2; 1.3; 1.4) mit der wenigstens einen Steckachse (3) verbindbar ausgebildet ist, wobei die wenigstens eine Profilleiste (2.1; 2.2; 2.3; 2.4) wenigstens eine Durchgangsöffnung (6) senkrecht zur Mantelfläche und/oder Oberfläche der wenigstens einen Profilleiste (2.1; 2.2; 2.3; 2.4) aufweist, wobei die wenigstens eine Steckachse (3) durch die wenigstens eine Durchgangsöffnung (6) der wenigstens einen Profilleiste (2.1; 2.2; 2.3; 2.4) durchsteckbar ausgebildet ist und wobei die wenigstens eine Steckachse (3) an der wenigstens einen Profilleiste (2.1; 2.2; 2.3; 2.4) von jeder Seite der wenigstens einen Profilleiste (2.1; 2.2; 2.3; 2.4) arretierbar ist, **dadurch gekennzeichnet, dass** die wenigstens eine Profilleiste (2.1; 2.2; 2.3; 2.4) wenigstens eine Wölbung (7.1; 7.2) aufweist, wobei die wenigstens eine Wölbung (7.1; 7.2) von der Oberfläche der wenigstens einen Profilleiste (2.1; 2.2; 2.3; 2.4) nach Innen und/oder Außen hineinragend und/oder herausragend ausgebildet ist, wobei die Wölbung (7.1; 7.2) konzentrisch zur Durchgangsöffnung (6) ausgebildet ist.

2. Steckbare Radanordnung nach Patentanspruch 1, **dadurch gekennzeichnet, dass** wenigstens eine Wölbung (7.1; 7.2) an der wenigstens einen Profilleiste (2.1; 2.2; 2.3; 2.4) auf jeder Seite der wenigstens einen Durchgangsöffnung (6) der wenigstens einen Profilleiste (2.1; 2.2; 2.3; 2.4) angeordnet ist.

3. Steckbare Radanordnung nach Patentanspruch 1 oder 2, **dadurch gekennzeichnet, dass** das wenigstens eine Rad (1.1; 1.2; 1.3; 1.4) mit der wenigstens einen Steckachse (3) von jeder Seite der Profilleiste (2.1; 2.2; 2.3; 2.4) in die jeweils wenigstens eine Durchgangsöffnung (6) der wenigstens einen Profilleiste (2.1; 2.2; 2.3; 2.4) und/oder der wenigstens einen Wölbung (7.1; 7.2) einsteckbar ist, wodurch das wenigstens eine Rad (1.1; 1.2; 1.3; 1.4) in eine erste Steckposition und eine zweite Steckposition verbringbar ist.

4. Steckbare Radanordnung nach Patentanspruch 1 - 3, **dadurch gekennzeichnet, dass** eine Veränderung der Spurbreite durch ein Umstecken des wenigstens einen Rads (1.1; 1.2; 1.3; 1.4) von einer ersten Steckposition in eine zweite Steckposition und/oder umgekehrt bewirkbar ist und/oder wenigstens ein Anschlag auf der dem wenigstens einen Rad (1.1; 1.2; 1.3; 1.4) zugewandten Seite der wenigstens einen Steckachse (3) angeordnet ist, wobei der wenigstens eine Anschlag das wenigstens eine Rad (1.1; 1.2; 1.3; 1.4) von der wenigstens einen Wölbung (7.1; 7.2) und/oder der wenigstens einen Profilleiste (2.1; 2.2; 2.3; 2.4) beabstandet und/oder der wenigstens eine Anschlag derart ausgebildet ist, dass die wenigstens eine Steckachse (3) in jeder Steckposition seitlich der Profilleiste (2.1; 2.2; 2.3; 2.4) und/oder Wölbung (7.1; 7.2) nicht übersteht.

5. Steckbare Radanordnung nach Patentanspruch 1 - 4, **dadurch gekennzeichnet, dass** die wenigstens eine Profilleiste (2.1; 2.2; 2.3; 2.4) als Profilrohr oder als mit einem Gitter gefüllte Stange ausgebildet ist.

6. Steckbare Radanordnung nach Patentanspruch 1 - 5, **dadurch gekennzeichnet, dass** die wenigstens eine Wölbung (7.1; 7.2) mit der wenigstens einen Arretiereinheit (4) wenigstens eine Arretierung ausbilden und/oder als wenigstens ein Arretiermodul ausgebildet sind.

7. Steckbare Radanordnung nach Patentanspruch 1 oder 6, **dadurch gekennzeichnet, dass** die wenigstens eine Arretiereinheit (4) auf der dem Rad (1.1; 1.2; 1.3; 1.4) abgewandten Seite der Steckachse (3) angeordnet ist.

8. Steckbare Radanordnung nach Patentanspruch 1 -7, **dadurch gekennzeichnet, dass** die wenigstens eine Wölbung (7.1; 7.2) je Seite der wenigstens einen Profilleiste (2.1; 2.2.; 2.3; 2.4) wenigstens eine der Form der wenigstens einen Arretiereinheit (4) entsprechende umlaufende Ringnut im Inneren der wenigstens einen Profilleiste (2.1; 2.2.; 2.3; 2.4) ausbilden und/oder die wenigstens eine Wölbung (7.1; 7.2) je Seite der wenigstens einen Profilleiste (2.1; 2.2; 2.3; 2.4) wenigstens eine der Form der wenigstens einen Arretiereinheit (4) entsprechende umlaufende Ringnut in der inneren und/oder äußeren Mantelfläche der wenigstens einen Wölbung (7.1; 7.2) aufweist.

9. Steckbare Radanordnung nach Patentanspruch 1 oder 6-8, **dadurch gekennzeichnet, dass** die wenigstens eine Arretiereinheit (4) als Einsatz in die wenigstens eine Profilleiste (2.1; 2.2; 2.3; 2.4) einschiebbar und/oder einsetzbar ausgebildet ist und/oder die wenigstens eine Arretiereinheit (4) über wenigstens ein Verbindungselement (12) mit der wenigstens einen Löseeinheit (8) verbindbar ausgebildet ist und/oder die wenigstens eine Arretiereinheit (4) gemeinsam mit dem wenigstens einen Verbindungselement (12) und der wenigstens einen Löseeinheit (8) wenigstens eine Arretierung und/oder als wenigstens ein Arretiermodul ausgebildet sind und/oder die wenigstens eine Löseeinheit (8) wenigstens eine Durchgangsbohrung aufweist, wobei die wenigstens eine Durchgangsbohrung als Doppelbohrung (11) mit zwei sich unterscheidenden Durchmessern ausgebildet ist.

10. Steckbare Radanordnung nach Patentanspruch 1 oder 3 oder 4, **dadurch gekennzeichnet, dass** die wenigstens eine Steckachse (3) eine umlaufende Ringnut (13) aufweist.

11. Steckbare Radanordnung nach Patentanspruch 9, **dadurch gekennzeichnet, dass** bei der wenigstens eine Doppelbohrung (11) ein erster und ein zweiter Durchmesser vorgesehen sind, wobei der erst Durchmesser dem Außendurchmesser der wenigstens einen Ringnut (13) der wenigstens einen Steckachse (3) und der zweite Durchmesser dem Außendurchmesser der wenigstens einen Steckachse (3) derart entspricht, dass die Durchmesser der Doppelbohrung (11) und die jeweiligen Außendurchmesser der wenigstens einen Ringnut (13) und der wenigstens einen Steckachse (3) jeweils als Passung ausgebildet sind.

12. Steckbare Radanordnung nach Patentanspruch 9, **dadurch gekennzeichnet, dass** die wenigstens eine Löseeinheit (8) wenigstens eine Senkung auf jeder Seite der wenigstens einen Löseeinheit (8) aufweist, wobei die Form der wenigstens einen Senkung der Form der wenigstens einen Doppelbohrung (11) folgend ausgebildet ist.

13. Steckbare Radanordnung nach Patentanspruch 1 - 9, **dadurch gekennzeichnet, dass** die wenigstens eine Profilleiste (2.1; 2.2; 2.3; 2.4) und die wenigstens eine Arretiereinheit (4) wenigstens eine weitere Durchgangsöffnung (10) aufweisen, wobei wenigstens ein Halteelement durch die wenigstens eine weitere Durchgangsöffnung (10) der wenigstens einen Profilleiste (2.1; 2.2; 2.3; 2.4) und der wenigstens einen Arretiereinheit (4) durchsteckbar ausgebildet ist.

14. Steckbare Radanordnung nach einem der vorangehenden Patentansprüche, **dadurch gekennzeichnet, dass** die wenigstens eine Arretierung und/oder das wenigstens eine Arretiermodul selbstarretierend ausgebildet ist.

15. Rollator (100), aufweisend wenigstens zwei Profilleisten (2.1; 2.2; 2.3; 2.4), wenigstens eine weitere Profilleiste, wenigstens drei Räder (1.1; 1.2; 1.3; 1.4), mit wenigstens einer steckbaren Radanordnung nach einem der vorangehenden Patentansprüche, wobei durch die wenigstens eine steckbare Radanordnung eine Spurbreitenveränderung des Rollators bewirkbar ist, wobei wenigstens eine Bremseinheit an einer wenigstens einen Haltemanschette angeordnet ist, wobei die wenigstens eine Haltemanschette an der wenigstens einen Profilleiste (2.1; 2.2; 2.3; 2.4) angeordnet ist und/oder die wenigstens eine Bremseinheit drehbar um die axiale Drehachse der wenigstens einen Profilleiste (2.1; 2.2; 2.3; 2.4) ausgebildet ist, wobei die wenigstens eine Haltemanschette als weitere Arretiereinheit ausgebildet ist und/oder die wenigstens eine Bremseinheit wenigstens eine Bremshülse mit mindestens einer daran angeordneter Bremsbacke aufweist und/oder die wenigstens eine Bremshülse mittels Zugkraftbeaufschlagung über wenigstens eine Bremsleitung verschiebbar ist, wobei die wenigstens eine Bremsleitung als ein Bowdenzug ausgebildet ist und wenigstens eine Seele sowie wenigstens eine Hülle umfasst.

## Claims

1. Plug-in wheel assembly comprising at least one wheel (1.1; 1.2; 1.3; 1.4), at least one profile strip (2.1; 2.2; 2.3; 2.4), at least one thru axle (3), at least one latching unit (4), wherein the at least one wheel (1.1; 1.2; 1.3; 1.4) is designed to be connectable to the at least one thru axle (3), wherein the at least one profile strip (2.1; 2.2; 2.3; 2.4) has at least one passage opening (6) perpendicular to the outer surface and/or surface of the at least one profile strip (2.1; 2.2; 2.3; 2.4), wherein the at least one thru axle (3) is designed to be threadable through the at least one passage opening (6) of the at least one profile strip (2.1; 2.2; 2.3; 2.4) and wherein the at least one thru axle (3) is lockable on the at least one profile strip (2.1; 2.2; 2.3; 2.4) from each side of the at least one profile strip (2.1; 2.2; 2.3; 2.4), **characterized in that** the at least one profile strip (2.1; 2.2; 2.3; 2.4) comprises at least one bulge (7.1; 7.2), wherein the at least one bulge (7.1; 7.2) protrudes inwardly and/or outwardly from the surface of the at least one profile strip (2.1; 2.2; 2.3; 2.4) and/or protruding outwards, wherein the bulge (7.1; 7.2) is formed concentrically with the passage opening (6).

2. Plug-in wheel assembly according to claim 1, **characterized in that** at least one bulge (7.1; 7.2) is arranged on the at least one profile strip (2.1; 2.2; 2.3; 2.4) on each side of the at least one passage opening (6) of the at least one profile strip (2.1; 2.2; 2.3; 2.4).

3. Plug-in wheel assembly according to patent claim 1 or 2, **characterized in that** the at least one wheel (1.1; 1.2; 1.3; 1.4) and the at least one thru axle (3) are pluggable from each side of the profile strip (2.1; 2.2; 2.3; 2.4) into the respective at least one passage opening (6) of the at least one profile strip (2.1; 2.2; 2.3; 2.4) and/or the at least one bulge (7.1; 7.2) from each side of the profile strip (2.1; 2.2; 2.3; 2.4), whereby the at least one wheel (1.1; 1.2; 1.3; 1.4) is movable into a first plug-in position and a second plug-in position.

4. Plug-in wheel assembly according to patent claims 1 - 3, **characterized in that** a change in track width is effectible by moving the at least one wheel (1.1; 1.2; 1.3; 1.4) from a first plug-in position to a second plug-in position and/or vice versa, and/or at least one limit stop is arranged on the side of the at least one plug-in axle (3) facing the at least one wheel (1.1; 1.2; 1.3; 1.4), wherein the at least one limit stop spaces the at least one wheel (1.1; 1.2; 1.3; 1.4) from the at least one bulge (7.1; 7.2) and/or the at least one profile strip (2.1; 2.2; 2.3; 2.4) and/or the at least one limit stop is designed such that the at least one thru axle (3) does not protrude laterally from the profile strip (2.1; 2.2; 2.3; 2.4) and/or bulge (7.1; 7.2) in any plug-in position.

5. Plug-in wheel assembly according to patent claims 1 - 4, **characterized in that** the at least one profile strip (2.1; 2.2; 2.3; 2.4) is designed as a profile tube or as a grid-filled rod.

6. Plug-in wheel assembly according to patent claims 1 - 5, **characterized in that** the at least one bulge (7.1; 7.2) with the at least one latching unit (4) form at least one latching and/or are designed as at least one latching module.

7. Plug-in wheel assembly according to patent claim 1 or 6, **characterized in that** the at least one latching unit (4) is arranged on the side of the thru axle (3) facing away from the wheel (1.1; 1.2; 1.3; 1.4).

8. Plug-in wheel assembly according to patent claims 1 - 7, **characterized in that** the at least one bulge (7.1; 7.2) on each side of the at least one profile strip (2.1; 2.2; 2.3; 2.4) form at least one circumferential ring groove corresponding to the shape of at least one latching unit (4) inside the at least one profile strip (2.1; 2.2; 2.3; 2.4) and/or the at least one bulge (7.1; 7.2) on each side of the at least one profile strip (2.1; 2.2; 2.3; 2.4) has at least one circumferential ring groove corresponding to the shape of at least one latching unit (4) in the inner and/or outer mantle surface of at least one bulge (7.1; 7.2).

9. Plug-in wheel assembly according to patent claim 1 or 6-8, **characterized in that** the at least one latching unit (4) is designed as an insert that is slidable and/or insertable into the at least one profile strip (2.1; 2.2; 2.3; 2.4) and/or the at least one latching unit (4) is designed to be connectable to the at least one release unit (8) via at least one connecting element (12) and/or the at least one latching unit (4) together with the at least one connecting element (12) and the at least one release unit (8) form at least one latching and/or at least one latching module, and/or the at least one release unit (8) has at least one passage bore, wherein the at least one passage bore is designed as a double bore (11) with two different diameters.

10. Plug-in wheel assembly according to patent claim 1 or 3 or 4, **characterized in that** the at least one thru axle (3) has a circumferential ring groove (13).

11. Plug-in wheel assembly according to patent claim 9, **characterized in that** at least one double bore (11) has a first and a second diameter, wherein the first diameter corresponds to the outer diameter of at least one ring groove (13) of at least one thru axle (3), and the second diameter corresponds to the outer diameter of the at least one thru axle (3) in such a way that the diameters of the double bore (11) and the respective outer diameters of the at least one ring groove (13) and the at least one thru axle (3) are each designed as a fit.

12. Plug-in wheel assembly according to patent claim 9, **characterized in that** the at least one release unit (8) has at least one recess on each side of the at least one release unit (8), wherein the shape of the at least one recess is designed to follow the shape of the at least one double bore (11).

13. Plug-in wheel assembly according to patent claims 1 - 9, **characterized in that** the at least one profile strip (2.1; 2.2; 2.3; 2.4) and the at least one latching unit (4) have at least one further passage opening (10), wherein at least one holding element is designed to be threadable through the at least one further passage opening (10) of the at least one profile strip (2.1; 2.2; 2.3; 2.4) and the at least one latching unit (4).

14. Plug-in wheel assembly according to one of the previous patent claims, **characterized in that** the at least one latching and/or the at least one latching module is designed to be self-locking.

15. Rollator (100) comprising at least two profile strips (2.1; 2.2; 2.3; 2.4), at least one further profile strip, at least three wheels (1.1; 1.2; 1.3; 1.4), with at least one plug-in wheel assembly according to one of the previous patent claims, wherein by the at least one plug-in wheel assembly a change of the track width of the rollator is effectible, wherein at least one brake unit is arranged on at least one holding sleeve, wherein the at least one holding sleeve is arranged on the at least one profile strip (2.1; 2.2; 2.3; 2.4) and/or the at least one brake unit is rotatable about the axial rotation axis of the at least one profile strip (2.1; 2.2; 2.3; 2.4), wherein the at least one holding sleeve is designed as a further latching unit and/or the at least one brake unit has at least one brake sleeve with at least one brake shoe arranged thereon and/or the at least one brake sleeve is displaceable by application of tensile force via at least one brake line, wherein the at least one brake line is designed as a Bowden cable and comprises at least one core and at least one sheath.

## Revendications

1. Ensemble de roues enfichables comportant au moins une roue (1.1 ; 1.2 ; 1.3 ; 1.4), au moins une baguette profilée (2.1 ; 2.2 ; 2.3 ; 2.4), au moins un axe d'enfichage (3), au moins une unité de blocage (4), l'au moins une roue (1.1 ; 1.2 ; 1.3 ; 1.4) étant formée de manière à pouvoir être reliée à l'au moins un axe d'enfichage (3), l'au moins une baguette profilée (2.1 ; 2.2 ; 2.3 ; 2.4) comportant au moins une ouverture de passage (6) perpendiculairement à la face extérieure et/ou à la surface de l'au moins une baguette profilée (2,1 ; 2,2 ; 2,3 ; 2,4), l'axe d'enfichage (3) traversant la ou les ouvertures de passage (6) de la ou des baguettes profilées (2.1 ; 2.2 ; 2.3 ; 2.4), et l'au moins un axe d'enfichage (3) pouvant être bloqué sur l'au moins une baguette profilée (2.1 ; 2.2 ; 2.3 ; 2.4) de chaque côté de l'au moins une baguette profilée (2.1 ; 2.2 ; 2.3 ; 2.4), **caractérisé en ce que** l'au moins une baguette profilée (2.1 ; 2.2 ; 2.3 ; 2.4) comporte au moins un bombement (7.1 ; 7.2), l'au moins un bombement (7.1 ; 7.2) étant formé de manière à faire saillie vers l'intérieur et/ou vers l'extérieur de la surface de l'au moins une baguette profilée (2.1 ; 2.2 ; 2.3 ; 2.4), le bombement (7.1 ; 7.2) étant formé concentriquement par rapport à l'ouverture de passage (6).

2. Ensemble de roues enfichables selon la revendication 1, **caractérisé en ce qu'**au moins un bombement (7.1 ; 7.2) est disposé sur l'au moins une baguette profilée (2.1 ; 2.2 ; 2.3 ; 2.4) de chaque côté de l'au moins une ouverture de passage (6) de l'au moins une baguette profilée (2.1 ; 2.2 ; 2.3 ; 2.4).

3. Ensemble de roues enfichables selon la revendication 1 ou 2, **caractérisé en ce que** l'au moins une roue (1.1 ; 1.2 ; 1.3 ; 1.4) peut être enfichée avec l'au moins un axe d'enfichage (3) de chaque côté de la baguette profilée (2.1 ; 2.2 ; 2.3 ; 2.4) dans l'au moins une ouverture de passage (6) respectivement de l'au moins une baguette profilée (2.1 ; 2.2 ; 2.3 ; 2.4) et/ou de l'au moins un bombement (7.1 ; 7.2), ce qui permet d'amener l'au moins une roue (1.1 ; 1.2 ; 1.3 ; 1.4) dans une première position d'enfichage et une deuxième position d'enfichage.

4. Ensemble de roues enfichables selon les revendications 1 à 3, **caractérisé en ce qu'**une modification de la largeur de voie peut être entraînée par un transfert de l'au moins une roue (1.1 ; 1.2 ; 1.3 ; 1.4) d'une première position d'enfichage dans une deuxième position d'enfichage et/ou inversement, et/ou au moins une butée est disposée sur le côté, tourné vers l'au moins une roue (1.1 ; 1.2 ; 1.3 ; 1.4), de l'au moins un axe d'enfichage (3), l'au moins une butée espaçant l'au moins une roue (1.1 ; 1.2 ; 1.3 ; 1.4) de l'au moins un bombement (7.1 ; 7.2) et/ou de l'au moins une baguette profilée (2.1 ; 2.2 ; 2.3 ; 2.4) et/ou l'au moins une butée étant formée de telle manière que l'au moins un axe d'enfichage (3) ne dépasse pas latéralement de la baguette profilée (2.1 ; 2.2 ; 2.3 ; 2.4) et/ou du bombement (7.1 ; 7.2) dans chaque position d'enfichage.

5. Ensemble de roues enfichables selon la revendication 1 à 4, **caractérisé en ce que** l'au moins une baguette profilée (2.1 ; 2.2 ; 2.3 ; 2.4) est réalisée sous la forme d'un tube profilé ou d'une barre remplie d'une grille.

6. Ensemble de roues enfichables selon les revendications 1 à 5, **caractérisé en ce que** l'au moins un bombement (7.1 ; 7.2) et l'au moins une unité de blocage (4) forment au moins un blocage et/ou sont formés sous la forme au moins d'un module de blocage.

7. Ensemble de roues enfichables selon la revendication 1 ou 6, **caractérisé en ce que** l'au moins une unité de blocage (4) est disposée sur le côté, opposé à la roue (1.1 ; 1.2 ; 1.3 ; 1.4), de l'axe d'enfichage (3).

8. Ensemble de roues enfichables selon les revendications 1 à 7, **caractérisé en ce que** l'au moins un bombement (7.1 ; 7.2) de chaque côté de l'au moins une baguette profilée (2.1 ; 2.2 ; 2.3 ; 2.4) forme au moins une rainure annulaire périphérique correspondant à la forme de l'au moins une unité de blocage (4) à l'intérieur de l'au moins une baguette profilée (2.1 ; 2.2 ; 2.3 ; 2.4) et/ou l'au moins un bombement (7.1 ; 7.2) comporte de chaque côté de l'au moins une baguette profilée (2.1 ; 2.2 ; 2.3 ; 2.4) au moins une rainure annulaire périphérique correspondant à la forme de l'au moins une unité de blocage (4) à l'intérieur et/ou sur dans la face extérieure de l'au moins un bombement (7.1 ; 7.2).

9. Ensemble de roues enfichables selon la revendication 1 ou les revendications 6 à 8, **caractérisé en ce que** l'au moins une unité de blocage (4) peut être enfichée en tant qu'insert dans l'au moins une baguette profilée (2.1 ; 2.2 ; 2.3 ; 2.4) et/ou l'au moins une unité de blocage (4) est formée de manière à pouvoir être reliée à l'au moins une unité de libération (8) par au moins un élément de liaison (12) et/ou l'au moins une unité de blocage (4) et l'au moins un élément de liaison (12) et l'au moins une unité de libération (8) forment au moins un blocage et/ou sont formés sous la forme d'au moins un module de blocage et/ou l'au moins une unité de libération (8) comporte au moins un alésage traversant, l'au moins un alésage traversant étant formé sous la forme d'un alésage double (11) avec deux diamètres différents.

10. Ensemble de roues enfichables selon la revendication 1 ou 3 ou 4, **caractérisé en ce que** l'au moins un axe d'enfichage (3) comporte une rainure annulaire périphérique (13).

11. Ensemble de roues enfichables selon la revendication 9, **caractérisé en ce qu'**un premier et un deuxième diamètre sont prévus pour l'au moins un double alésage (11), le premier diamètre correspondant au diamètre extérieur de l'au moins une rainure annulaire (13) de l'au moins un axe d'enfichage (3) et le deuxième diamètre correspondant au diamètre extérieur de l'au moins un axe d'enfichage (3) de telle manière que les diamètres du double alésage (11) et les diamètres extérieurs respectifs de l'au moins une rainure annulaire (13) et de l'au moins un axe d'enfichage (3) sont formés respectivement par ajustement.

12. Ensemble de roues enfichables selon la revendication 9, **caractérisé en ce que** l'au moins une unité de libération (8) comporte au moins un creux de chaque côté de l'au moins une unité de libération (8), la forme de l'au moins un creux étant formée de manière à suivre la forme de l'au moins un alésage double (11).

13. Ensemble de roues enfichables selon les revendications 1 à 9, **caractérisé en ce que** l'au moins une baguette profilée (2.1 ; 2.2 ; 2.3 ; 2.4) et l'au moins une unité de blocage (4) comportent au moins une autre ouverture de passage (10), au moins un élément de retenue étant formé par l'au moins une autre ouverture de passage (10) de l'au moins une baguette profilée (2.1 ; 2.2 ; 2.3 ; 2.4) et de l'au moins une unité de blocage (4).

14. Ensemble de roues enfichables selon l'une des revendications précédentes, **caractérisé en ce que** l'au moins un blocage et/ou l'au moins un module de blocage sont formés de manière autobloquante.

15. Déambulateur (100) comportant au moins deux baguettes profilées (2.1 ; 2.2 ; 2.3 ; 2.4), au moins une autre baguette profilée, au moins trois roues (1.1 ; 1.2 ; 1.3 ; 1.4), avec au moins un ensemble de roues enfichables selon l'une des revendications précédentes, une modification de largeur de voie du déambulateur pouvant être entraînée par l'au moins un ensemble de roues enfichables, au moins une unité de freinage étant disposée sur au moins un manchon de retenue, l'au moins un manchon de retenue étant disposé sur l'au moins une baguette profilée (2.1 ; 2.2 ; 2.3 ; 2.4) et/ou l'au moins une unité de freinage étant formée de manière à pouvoir tourner autour de l'axe de rotation axial de l'au moins une baguette profilée (2.1 ; 2.2 ; 2.3 ; 2.4), l'au moins un manchon de retenue étant formé sous la forme d'une autre unité de blocage et/ou l'au moins une unité de freinage comportant au moins une douille de freinage avec au moins un segment de frein disposé dessus et/ou l'au moins une douille de freinage pouvant être coulissée par application d'une force de traction par au moins une conduite de frein, l'au moins une conduite de frein étant formée sous la forme d'un câble Bowden et comprenant au moins un noyau et au moins une gaine.
